# EUROPEAN PATENT APPLICATION

(11) **EP 4 823 175 A1**
(43) Date of publication of application: **14.10.2026**
(21) Application number: 24911273.1
(22) Date of filing: 25.12.2024
(51) Int. Cl.: H04W 36/00

(54) **COMMUNICATION METHOD, APPARATUS, SYSTEM, STORAGE MEDIUM, AND PROGRAM PRODUCT**

(30) Priority: 29.12.2023 CN 202311872166
(71) Applicant: Huawei Technologies Co., Ltd., Shenzhen, Guangdong 518129 (CN)
(72) Inventor: ZONG, Zaifeng, Shenzhen, Guangdong 518129 (CN); YIN, Yu, Shenzhen, Guangdong 518129 (CN); YUAN, Liping, Shenzhen, Guangdong 518129 (CN)
(74) Representative: Pfenning, Meinig & Partner mbB
(86) International application number: PCT/CN2024/142482
(87) International publication number: WO 2025/140351

(57) **Abstract**

Embodiments of this disclosure provide a communication method, apparatus, and system, and a storage medium. In the method, a first core network device receives a registration request for requesting access of a terminal device to a second network. When the terminal device is allowed to access the second network, the first core network device sends first information to a first access network device serving the terminal device. The first information indicates that, when a target access network device or a target cell for accessing the second network is selected for the terminal device, an access network device or a cell whose service coverage includes a coverage area of the second network is preferentially selected. In this way, in embodiments of this disclosure, when the terminal device moves between networks (for example, between a subnet and an operator network), service continuity can be improved.

## Description

This application claims priority to Chinese Patent Application No. 202311872166.8, filed with the China National Intellectual Property Administration on December 29, 2023 and entitled "COMMUNICATION METHOD, APPARATUS, AND SYSTEM, STORAGE MEDIUM, AND PROGRAM PRODUCT", which is incorporated herein by reference in its entirety.

### TECHNICAL FIELD

This disclosure generally relates to the communication field, and more specifically, to a communication method, apparatus, and system, a computer-readable storage medium, and a computer program product.

### BACKGROUND

Technologies such as multi-access edge computing (MEC, multi-access edge computing) and slicing are introduced into 5G to deploy networks in campuses, factories, museums, and the like, to switch promotion of mobile networks from 2C (to customer, to customer) to 2B (to business, to business), and expand the market of 3rd generation partnership project (3GPP, 3rd generation partnership project) mobile networks. When a terminal device moves between networks, a service of the terminal device may be interrupted.

### SUMMARY

Embodiments of this disclosure provide a communication method, apparatus, and system, a computer-readable storage medium, and a computer program product, to improve service continuity.

According to a first aspect, a communication method is provided. The method may be performed by a core network device used for communication, or a chip in the core network device used for communication. An example in which the method is performed by the core network device used for communication is used below for description. In the method, a first core network device receives a registration request for requesting access of a terminal device to a second network. When the terminal device is allowed to access the second network, the first core network device sends first information to a first access network device serving the terminal device. The first information indicates that, when a target access network device or a target cell for accessing the second network is selected for the terminal device, an access network device or a cell whose service coverage includes a coverage area of the second network is preferentially selected. In this manner, when requesting to access the second network, the terminal device can preferentially select the access network device or the cell whose service coverage includes the coverage area of the second network, to achieve a short access delay, increase an access success rate, reduce access costs, and improve service continuity of the second network.

In some implementations, the first information includes at least one of the following: identification information of the second network; a cell list, where the cell list includes information about one or more cells whose service coverage includes the coverage area of the second network; or an access network device list, where the access network device list includes information about one or more access network devices whose service coverage includes the coverage area of the second network. In this manner, the first access network device may sense, based on the indication, the one or more cells whose service coverage includes the coverage area of the second network.

In some implementations, the first core network device is a core network device serving a first network, and the method according to the first aspect further includes: The first core network device receives a context request (which may be referred to as a second context request) from a second core network device, where the second core network device serves the second network, the second context request is used to obtain a context of the terminal device, and the second context request includes first indication information indicating that the second core network device serves the second network. The first core network device sends the context of the terminal device to the second core network device based on the first indication information, where the context does not include sensitive information of the terminal device. In this manner, leakage of sensitive user information can be prevented.

In some implementations, the method further includes: The first core network device receives, from the second core network device, second indication information indicating deletion of the context of the terminal device. The first core network device deletes, based on the second indication information, the context of the terminal device on the first core network device and a session resource corresponding to the terminal device. In this manner, when the terminal device moves from the first network to the coverage area of the second network, a corresponding resource in the first network may be deleted, to save network resources.

In some implementations, the first core network device is a core network device serving a first network, and the method according to the first aspect further includes: The first core network device receives a handover request message (which may be referred to as a first handover request message) from the first access network device, where the first handover request message includes identification information of the target access network device or the target cell to be accessed by the terminal device. The first core network device selects, based on the target access network device or the target cell to be accessed by the terminal device being an access network device or a cell whose service coverage includes the coverage area of the second network, a second core network device serving the second network. The first core network device sends a context of the terminal device to the second core network device, where the context does not include sensitive information of the terminal device. In this way, leakage of sensitive user information is prevented.

In some implementations, the method further includes: The first core network device determines, based on at least one of the following, that the target access network device or the target cell to be accessed by the terminal device is an access network device or a cell whose service coverage includes the coverage area of the second network: The first handover request message indicates that the target access network device or the target cell to be accessed by the terminal device serves the second network; or the coverage area of the second network includes a service area of the target access network device or the target cell to be accessed by the terminal device, and subscription information of the second network includes the coverage area of the second network. In this manner, whether access from the terminal device is allowed is determined.

In some implementations, the method further includes: The first core network device sends second information to the first access network device, where the second information indicates that, when w target access network device or w target cell for accessing the second network is selected for the terminal device, an access network device or a cell whose service coverage includes an area, in the coverage area of the second network, that the terminal device is allowed to access is selected. In this manner, during selection of the target access network or cell for the terminal device, an access network device or a cell in an access-allowed area of the second network may be selected for access, to avoid power consumption caused by continuous attempts of the terminal device due to an access failure.

In some implementations, the method further includes: The first core network device sends third information to the terminal device, where the third information indicates the terminal device to: when selecting a target access network device or a target cell for accessing the second network, select an access network device or a cell whose service coverage includes an area, in the coverage area of the second network, that the terminal device is allowed to access. In this manner, when selecting a target access network or cell, the terminal device may select an access network device or a cell in an access-allowed area of the second network for access, to avoid continuous attempts due to an access failure, and reduce power consumption of the terminal device.

In some implementations, the first core network device is a core network device serving a first network, the registration request includes identification information of the terminal device, the identification information is an identifier allocated by a second core network device serving the second network, and the method according to the first aspect further includes: determining the second core network device based on the identification information; and sending a context request (which may be referred to as a first context request) to the second core network device, where the first context request is used to obtain a context of the terminal device, and the first context request includes the identification information of the terminal device; and receiving the context of the terminal device from the second core network device. In this manner, the context of the terminal device may be obtained, based on the identification information of the terminal device, from a core network device serving the second network, to access the second network.

In some implementations, the first core network device is a core network device serving a first network, and the method according to the first aspect further includes: storing address information of a second core network device in a context of the terminal device. In this way, the second core network device can be determined based on the context of the terminal device.

In some implementations, sending the context of the terminal device in the first network includes: determining that the second core network device has permission to obtain the context of the terminal device; and sending the context of the terminal device based on that the second core network device has the permission. In this manner, the context of the terminal device is sent only to a core network device with corresponding permission, to improve security.

In some implementations, the first core network device is a core network device serving a first network, the first access network device is an access network device serving the first network, and the method according to the first aspect further includes: receiving a handover request message (which may be referred to as a third handover request message) sent by the first access network device, where the third handover request message indicates the target access network device or the target cell to be accessed by the terminal device; selecting, based on determining that the target access network device or the target cell to be accessed by the terminal device is an access network device or a cell whose service coverage includes a coverage area of the first network, a third core network device serving the first network, to serve the terminal device; and sending a context of the terminal device to the third core network device, where the context includes information about a second core network device serving the second network and identification information of the second network, and the identification information of the second network indicates that a network accessed by the terminal device is the second network. In this manner, when a location of the terminal device is in the coverage area of the first network, the terminal device may select an access network device or a cell whose service coverage includes the coverage area of the first network to access the second network, to improve service continuity of the second network.

In some implementations, the first core network device is a core network device serving the second network, the first access network device is an access network device serving the second network, and the method according to the first aspect further includes: receiving a handover request message (which may be referred to as a fourth handover request message) sent by the first access network device, where the fourth handover request message indicates the target access network device or the target cell to be accessed by the terminal device; selecting, based on determining that the target access network device or the target cell is an access network device or a cell whose service coverage includes a coverage area of a first network, a fourth core network device serving the first network, to serve the terminal device; and sending a context of the terminal device to the fourth core network device, where the context includes information about the first core network device and identification information of the second network, and the identification information of the second network indicates that a network accessed by the terminal device is the second network. In this manner, when moving from the coverage area of the second network to the coverage area of the first network, the terminal device may select an access network device or a cell whose service coverage includes the coverage area of the first network to access the second network, to improve service continuity.

In some implementations, the method further includes: determining, based on information about a service area of the second network, to allow the terminal device to access the second network. In this manner, a terminal device in the service area of the second network is allowed to access the second network, and access from a terminal device outside the service area is restricted.

In some implementations, the first core network device is a core network device serving a first network, and the method further includes: obtaining subscription information of the second network in a first network (or referred to as subscription information of the second network), where the subscription information includes information about a service area of the second network; and determining, based on the subscription information, to allow the terminal device to access the second network. In this manner, whether the terminal device is allowed to access the second network is determined based on the subscription information at a granularity of the second network, to improve access efficiency and access security.

In some implementations, the first core network device is a core network device serving a first network, and the method according to the first aspect further includes: sending an access request to a second core network device serving the second network, where the access request is used to request the second core network device to authorize the terminal device to access the second network; and receiving an authorization accept indication sent by the second core network device, and determining, based on the authorization accept indication, to allow the terminal device to access the second network. In this manner, access from the terminal device is authorized by a core network device in the second network.

In some implementations, the access request includes first identification information of the terminal device, and the first identification information includes at least one of the following: a mobile station international subscriber directory number (MSISDN), a subscription concealed identifier (SUCI), or a temporary identifier.

According to a second aspect, a communication method is provided. The method may be performed by a second core network device used for communication, or a chip in the second core network device used for communication. An example in which the method is performed by the second core network device used for communication is used below for description. In the method, the second core network device serving a second network receives a registration request message from a terminal device, where the registration request message is used to request access of the terminal device to the second network, and the registration request message includes identification information of the terminal device. The second core network device sends, based on the identification information of the terminal, a context request to a core network device serving a first network, where the context request is used to obtain a context of the terminal device, and the context request includes first indication information indicating that the second core network device serves the second network. The second core network device receives the context of the terminal device from the core network device serving the first network, where the context of the terminal device does not include sensitive information of the terminal device. In this manner, the sensitive information of the terminal device is hidden from a subnet control plane, to prevent leakage of sensitive user information.

In some implementations, the method further includes: sending, to the core network device serving the first network, an indication for deleting the context of the terminal device. In this manner, resources are saved, and security is improved.

According to a third aspect, a communication method is provided. The method may be performed by a second core network device used for communication, or a chip in the second core network device used for communication. An example in which the method is performed by the second core network device used for communication is used below for description. In the method, a core network device serving a second network receives a handover request message sent by a first access network device serving a terminal device, where the handover request message indicates a target access network device or a target cell to be accessed by the terminal device; and selects, based on determining that the target access network device or the target cell is an access network device or a cell serving a first network, a core network device serving the first network, to serve the terminal device. In this manner, when the terminal device is located in a coverage area of the first network, the terminal device may be served by the core network device of the first network, to access the second network.

In some implementations, it is determined, based on at least one of the following, that the target access network device or the target cell is an access network device or a cell serving the first network: The handover request message sent by the first access network device serving the terminal device indicates that the target access network device or the target cell is an access network device or a cell whose service coverage includes the coverage area of the first network; a service area of the target access network device or the target cell is outside an area of a coverage area of the second network, where a service area of the second network is indicated by first subscription information of the second network in the first network; or the core network device serving the second network has not established a connection to or exchanged information with the target access network device. In this manner, that the terminal device moves to an area in the coverage area of the first network is sensed, to trigger handover or RRC redirection, and improve service continuity. In some implementations, the method further includes: sending the handover request message to the core network device serving the first network, where the handover request message includes at least one of the following: identification information of the second network, a context of the terminal device, or callback address information of the core network device serving the second network, where the callback address information is used to exchange a message between the core network device serving the first network and the core network device serving the second network, and the identification information of the second network indicates that the terminal device accesses the second network. In this manner, the served terminal device is handed over to access the second network through the first network, to avoid service interruption.

According to a fourth aspect, a communication method is provided. The method may be performed by a first access network device serving a terminal device, or a chip used in the first access network device. An example in which the method is performed by the first access network device is used below for description. In the method, the first access network device serving the terminal device receives first information, where the first information indicates that, when a target access network device or a target cell for accessing a second network is selected for the terminal device, an access network device or a cell whose service coverage includes a coverage area of the second network is preferentially selected. The first access network device determines, based on the first information, a first target access network device or a first target cell to be accessed by the terminal device. The first access network device sends a handover request message to a core network device serving the terminal device, where the handover request message includes identification information of the first target access network device or identification information of the first target cell. Alternatively, the first access network device sends a radio resource control (RRC) redirection message to the terminal device, where the RRC redirection message indicates the terminal device to reselect the first target access network device or the first target cell to access the second network. In this manner, the first access network device serving the terminal device may preferentially select an access network device or a cell in the coverage area of the second network based on the indication, and trigger handover or RRC redirection, to improve service continuity of the second network.

In some implementations, the first information includes at least one of the following: identification information of the second network; a cell list, where the cell list includes information about one or more cells whose service coverage includes the coverage area of the second network; or an access network device, where the access network device includes information about one or more access network devices whose service coverage includes the coverage area of the second network. In this way, the first access network device serving the terminal device can determine an access network device list based on the identification information of the second network or a list of cells in the coverage area of the second network, to preferentially select an access network device or a cell, to improve access network device or cell selection efficiency, increase a connection success rate, and avoid service interruption.

In some implementations, the method further includes: The first access network device receives measurement reporting information of the first target cell from the terminal device, where the measurement reporting information includes the identification information of the second network. Alternatively, the first access network device receives indication information, where the indication information indicates that a service coverage of the first target access network device or the first target cell includes the coverage area of the second network. Alternatively, the first access network device determines, based on local configuration information, that a service coverage of the first target access network device or the first target cell includes the coverage area of the second network. In this way, the first access network device can sense a cell or an access network device in the second network, to access the second network, to achieve a short delay and improve service continuity of the second network.

In some implementations, the method further includes: The first access network device sends indication information to the terminal device, where the indication information indicates to include the identification information of the second network in the measurement reporting information when the service coverage of the first target cell includes the coverage area of the second network. In this way, an access network device serving the terminal device can sense a cell or an access network device in the second network based on the measurement reporting information of the terminal device.

In some implementations, the method further includes: The first access network device receives second information, where the second information indicates the first access network device to select a cell in an access-allowed area of the second network when determining the target cell. In this manner, the terminal selects the cell in the access-allowed area, to access the second network, to avoid service interruption and increase an access success rate.

In some implementations, the method further includes: The first access network device selects the first target access network device or the first target cell when there is an access network device or a cell whose service coverage includes the coverage area of the second network in a neighboring access network device or a neighboring cell of an access network device or a cell currently accessed by the terminal device. An access network device or a cell in the coverage area of the second network may be preferentially selected for access, to achieve a short access delay, increase an access success rate, reduce access costs, and improve service continuity of the second network.

In some implementations, the handover request message indicates that the first target access network device or the first target cell serves the second network. In this way, the first access network device serving the terminal device determines an access network device or a cell in the second network based on the indication, to enable the terminal device to access the second network, and avoid service interruption.

According to a fifth aspect, a communication method is provided. The method may be performed by a terminal device, or a chip used in the terminal device. An example in which the method is performed by the terminal device is used below for description. In the method, the terminal device receives indication information from a first access network device, where the indication information indicates the terminal device to perform measurement on a first target cell. The terminal device sends measurement reporting information of the first target cell based on the indication information, where the measurement reporting information of the first target cell includes identification information of a target network, and a service coverage of the first target cell includes a coverage area of the target network. In this manner, the first access network device may sense, based on the measurement reporting information, whether a network served by the first target cell is a network to be preferentially accessed by the terminal device.

In some implementations, the indication information further indicates to include the identification information of the target network in the measurement reporting information of the first target cell when the service coverage of the first target cell includes the coverage area of the target network.

In some implementations, the indication information further indicates to include an identifier of the target network in the measurement reporting information when the target network is a second network. The second network is a network of a specific type, for example, a non-public land mobile network. In this way, the terminal device does not need to include the identification information of the target network in each piece of measurement reporting information, but includes the identification information of the target network in the measurement reporting information only when the first target cell is a cell serving the second network, so that signaling overheads can be reduced.

In some implementations, the terminal reads a first system information broadcast (System Information broadcast, SIB) field of the first target cell to obtain an identifier of a network served by the first target cell.

In some implementations, the terminal device receives third information from a first core network device, where the third information indicates the terminal device to: when selecting a target access network device or a target cell for accessing the second network, select an access network device or a cell whose service coverage includes an area, in a coverage area of the second network, that the terminal device is allowed to access. In this way, the terminal device can preferentially select, based on a configuration, the access-allowed area in the coverage area of the second network to access the second network, to achieve a short access delay, increase an access success rate, reduce access costs, and improve service continuity of the second network.

According to a sixth aspect, a communication apparatus is provided. For beneficial effects, refer to the descriptions of the first aspect. Details are not described herein again. The communication apparatus has a function of implementing the behavior in the method example in the first aspect. The function may be implemented by hardware, or may be implemented by hardware executing corresponding software. The hardware or the software includes one or more modules corresponding to the foregoing function. In a possible design, the communication apparatus includes: a first receiving unit, configured to receive a registration request for requesting access of a terminal device to a second network; and a first sending unit, configured to: when the terminal device is allowed to access the second network, send first information to a first access network device serving the terminal device. The first information indicates that, when a target access network device or a target cell for accessing the second network is selected for the terminal device, an access network device or a cell whose service coverage includes a coverage area of the second network is preferentially selected.

According to a seventh aspect, a communication apparatus is provided. For beneficial effects, refer to the descriptions in the second aspect. Details are not described herein again. The communication apparatus has a function of implementing the behavior in the method example in the second aspect. The function may be implemented by hardware, or may be implemented by hardware executing corresponding software. The hardware or the software includes one or more modules corresponding to the foregoing function. In a possible design, the communication apparatus includes: a second receiving unit, configured to receive a registration request message from a terminal device, where the registration request message is used to request access of the terminal device to the second network, and the registration request message includes identification information of the terminal device; and a second sending unit, configured to send, based on the identification information of the terminal, a context request to a core network device serving a first network, where the context request is used to obtain a context of the terminal device, and the context request includes first indication information indicating that the second core network device serves the second network. The second receiving unit is further configured to receive the context of the terminal device from the core network device serving the first network, where the context of the terminal device does not include sensitive information of the terminal device.

According to an eighth aspect, a communication apparatus is provided. For beneficial effects, refer to the descriptions in the third aspect. Details are not described herein again. The communication apparatus has a function of implementing the behavior in the method example in the third aspect. The function may be implemented by hardware, or may be implemented by hardware executing corresponding software. The hardware or the software includes one or more modules corresponding to the foregoing function. In a possible design, the communication apparatus includes: a receiving unit, configured to receive a handover request message sent by a first access network device serving a terminal device, where the handover request message indicates a target access network device or a target cell to be accessed by the terminal device; and a selection unit, configured to select, based on determining that the target access network device or the target cell is an access network device or a cell serving a first network, a core network device serving the first network, to serve the terminal device.

According to a ninth aspect, a communication apparatus is provided. For beneficial effects, refer to the descriptions in the fourth aspect. Details are not described herein again. The communication apparatus has a function of implementing the behavior in the method example in the fourth aspect. The function may be implemented by hardware, or may be implemented by hardware executing corresponding software. The hardware or the software includes one or more modules corresponding to the foregoing function. In a possible design, the communication apparatus includes: a third receiving unit, configured to receive first information, where the first information indicates that, when a target access network device or a target cell for accessing a second network is selected for the terminal device, an access network device or a cell whose service coverage includes a coverage area of the second network is preferentially selected; a determining unit, configured to determine, based on the first information, a first target access network device or a first target cell to be accessed by the terminal device; and a third sending unit, configured to send a handover request message to a core network device serving the terminal device, where the handover request message includes identification information of the first target access network device or identification information of the first target cell; or a third sending unit, configured to send a radio resource control (radio resource control, RRC) redirection message to the terminal device, where the RRC redirection message indicates the terminal device to reselect the first target access network device or the first target cell to access the second network.

According to a tenth aspect, a communication apparatus is provided. For beneficial effects, refer to the descriptions in the fifth aspect. Details are not described herein again. The communication apparatus has a function of implementing the behavior in the method example in the fifth aspect. The function may be implemented by hardware, or may be implemented by hardware executing corresponding software. The hardware or the software includes one or more modules corresponding to the foregoing function. In a possible design, the communication apparatus includes: a fourth sending unit, configured to send a registration request, where the registration request is used for a first core network device to determine that a terminal device is allowed to access a second network; and a fourth receiving unit, configured to receive third information from the first core network device, where the third information indicates the terminal device to: when selecting a target access network device or a target cell for accessing the second network, select an access network device or a cell whose service coverage includes an area, in a coverage area of the second network, that the terminal device is allowed to access.

According to an eleventh aspect, an apparatus is provided, including a processor and a memory storing instructions. When the instructions are executed by the processor, an electronic device is enabled to perform the method according to any one of the first aspect to the fifth aspect or the implementations of the first aspect to the fifth aspect.

According to a twelfth aspect, a computer-readable storage medium is provided. The computer-readable storage medium stores instructions. When the instructions are executed by an electronic device, the electronic device is enabled to perform the methods performed by the apparatuses in the foregoing aspects.

According to a thirteenth aspect, a computer program product is provided. The computer program product includes instructions. When the instructions are executed by an electronic device, the electronic device is enabled to perform the methods performed by the apparatuses in the foregoing aspects.

According to a fourteenth aspect, an embodiment of this disclosure provides a chip system. The chip system includes a processor, configured to implement the functions of the apparatuses in the methods according to the foregoing aspects. In a possible design, the chip system further includes a memory, configured to store program instructions and/or data. The chip system may include a chip, or may include a chip and another discrete component.

According to a fifteenth aspect, an embodiment of this disclosure further provides a communication system, including an apparatus for performing any one of the methods in the first aspect to the fifth aspect.

### BRIEF DESCRIPTION OF DRAWINGS

FIG. 1A is a diagram of an architecture of a communication system in some solutions;
FIG. 1B is a diagram of a communication system according to some embodiments of this disclosure;
FIG. 1C is a diagram of an architecture of a communication system according to some embodiments of this disclosure;
FIG. 2A is a diagram of a communication process according to some embodiments of this disclosure;
FIG. 2B is a diagram of a communication process according to some other embodiments of this disclosure;
FIG. 3A and FIG. 3B are a diagram of a communication process in an example scenario according to some embodiments of this disclosure;
FIG. 4A and FIG. 4B are a diagram of a communication process in an example scenario according to some other embodiments of this disclosure;
FIG. 5A and FIG. 5B are a diagram of a communication process in an example scenario according to still some other embodiments of this disclosure;
FIG. 6A and FIG. 6B are a diagram of a communication process in an example scenario according to still some other embodiments of this disclosure;
FIG. 7A and FIG. 7B are a diagram of a communication process in an example scenario according to still some other embodiments of this disclosure;
FIG. 8A and FIG. 8B are a diagram of a communication process in an example scenario according to still some other embodiments of this disclosure;
FIG. 9 is a schematic flowchart of an implementation at a communication apparatus according to some embodiments of this disclosure;
FIG. 10 is a schematic flowchart of an implementation at a communication apparatus according to some other embodiments of this disclosure;
FIG. 11 is a schematic flowchart of an implementation at a communication apparatus according to still some other embodiments of this disclosure;
FIG. 12 is a diagram of main composition of an example device in a possible implementation according to an embodiment of this disclosure; and
FIG. 13 is a simplified block diagram of an example device in a possible implementation according to an embodiment of this disclosure.

### DESCRIPTION OF EMBODIMENTS

Embodiments of this disclosure are described below in more detail with reference to the accompanying drawings. Although some embodiments of this disclosure are shown in the accompanying drawings, it should be understood that embodiments of this disclosure may be implemented in various forms and should not be construed as being limited to embodiments described herein, and instead, these embodiments are provided for a more thorough and complete understanding of this disclosure. It should be understood that the accompanying drawings and embodiments of this disclosure are merely examples and are not intended to limit the protection scope of this disclosure.

In descriptions of embodiments of this disclosure, the term "including" and similar terms thereof should be understood as non-exclusive inclusions, namely, "including but not limited to". The term "based on" should be understood as "at least partially based on". The term "an embodiment" or "the embodiment" should be understood as "at least one embodiment". The terms "first", "second", and the like may indicate different objects or a same object. Other explicit and implicit definitions may be further included in the following descriptions.

Embodiments of this disclosure may be implemented according to any appropriate communication protocol, including but not limited to: cellular communication protocols such as a 3rd generation (3rd Generation, 3G) communication protocol, a 4th generation (4G) communication protocol, a 5th generation (5G) communication protocol, and a future communication protocol (for example, 6th generation (6G)), wireless local area network communication protocols such as Institute of Electrical and Electronics Engineers (institute of electrical and electronics engineers, IEEE) 802.11, and/or any other protocols that are currently known or are to be developed in future.

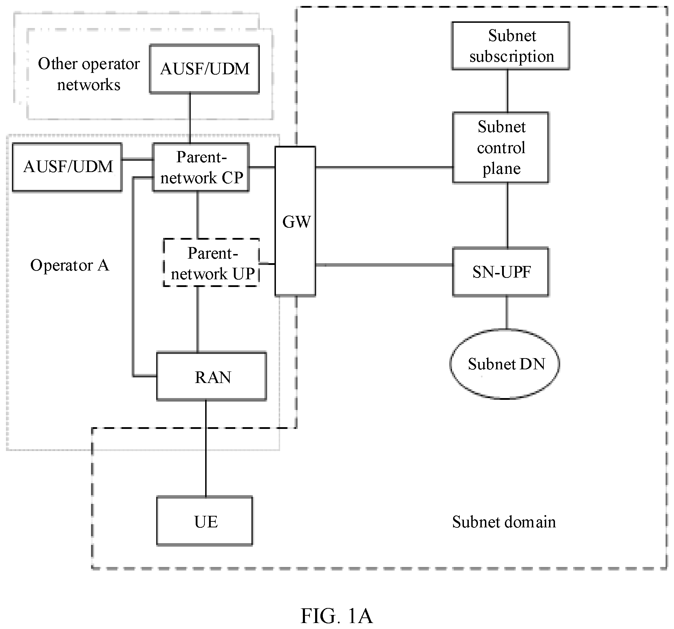

A public network integrated non-public network (public network integrated non-public network, PNI-NPN) technology in 5G supports access in a campus scenario through slicing, a multi-protocol data unit (protocol data unit, PDU) session, or offloading. In this mode, only user equipment (user equipment, UE) of one operator can access a campus. To be specific, when the campus cooperates with an operator A and the operator A deploys a network for the campus, a user of an operator B cannot access the campus network. The campus, for example, an enterprise, a school, or a stadium, is referred to as a subnet site. An owner of the subnet site may be referred to as a subnet tenant. A visitor of the subnet site, a member/employee of the subnet site, or the like is referred to as a subnet user. Services provided by the subnet tenant for the subnet user, such as XR gaming, AR navigation at the site, and immersive conferencing, are referred to as subnet services. In this specification, a network deployed for the subnet site is referred to as a subnet, and the subnet is used for the subnet user to connect to and access the subnet services provided by the subnet site. A party that deploys the subnet for the subnet tenant to provide access for the subnet user who visits the subnet site is referred to as a subnet operator. In an architecture provided in some solutions, as shown in FIG. 1A, cross-operator sharing of a subnet is supported. In the architecture, after a subnet is deployed in cooperation with only one operator in a subnet domain, UE of another operator can access the subnet. Network elements deployed by the cooperative operator include an access network device (radio access network, RAN), a parent-network user plane (user plane, UP), and a parent-network control plane (control plane, CP). To support access from a terminal of another operator, a base station (SN-RAN) broadcasts a subnet identifier, and the terminal device selects, based on the subnet identifier, the base station for access. There is an interface between the control plane and an authentication server function (authentication server function, AUSF)/unified data management (unified data management, UDM) of a home operator of the terminal, and the interface may be used for performing identity authentication on the terminal based on a subscriber identity module (subscriber identity module, SIM) card. A user subscription of the subnet is stored in a subnetwork subscriber and policy network element (subnetwork subscriber and policy management, SSPM) in the subnet domain, to authorize UE to access the subnet. To support quick deployment, a subnet operator may be introduced in a business model. A subnet tenant subscribes to the subnet operator, and the subnet operator cooperates with a parent-network operator to deploy the subnet. A subnet control plane (control plane, CP) in the subnet domain is configured to forward control signaling between the operator and the subnet domain, and a gateway (gateway, GW) is configured to forward user plane data between the subnet domain and an operator domain. The subnet CP and the GW are introduced, so that the operator does not need to connect to each campus, and only needs to connect to the pre-deployed device GW and subnet CP. The subnet operator is responsible for the connection to the subnet domain. This can simplify work of the operator, to support quick network deployment. When the UE accesses the subnet, the parent-network CP provides functions of mobility management and session management. The parent-network CP performs SIM card-based authentication on the UE, and the subnet CP authorizes user access based on user subscription data (stored in the SSPM) of the subnet domain.

The foregoing architecture may support UE in accessing a campus service through a shared subnet. However, when the UE leaves a coverage area of the subnet, continuity of an ongoing subnet service cannot be maintained. In some scenarios, for example, in a scenario 1, a user is connected to a subnet service through a subnet, and is holding a conference call through the subnet. In this case, if the user leaves a company in an emergency and still expects to keep the conference call uninterrupted, a problem of how to keep the conference call uninterrupted in this scenario cannot be resolved in the foregoing architecture. For another example, in a scenario 2, an automatic guided vehicle (automatic guided vehicle, AGV) flat cart may move out of a coverage area of a subnet when moving in a campus. To be specific, the AGV flat cart may move back and forth between a coverage area of a parent network and the coverage area of the subnet. During this process, the AGV flat cart needs to maintain service continuity. A problem of how to improve service continuity of the AGV flat cart in this scenario cannot be resolved in the foregoing architecture either. In some existing solutions, when UE performs access through an external network, a VPN typically needs to be established to access a campus service. In this case, a VPN connection needs to be established, leading to a long delay and service interruption. Consequently, manual reconnection is needed. When the UE frequently moves at a boundary, experience is poor. In addition, two systems need to be maintained in a campus: a VPN system and a subnet system, increasing complexity of maintenance. If some terminal devices have no access to the Internet (Internet) after leaving the campus, the terminal devices cannot be reconnected to the campus. According to solutions in some embodiments of this disclosure, service continuity can be maintained when UE moves between a subnet and an operator network.

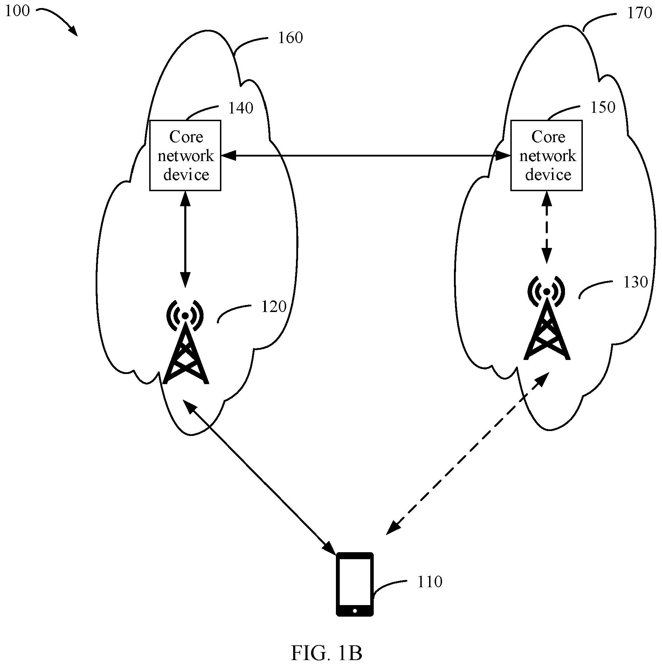

FIG. 1B is a diagram of a communication system according to some embodiments of this disclosure. As shown in FIG. 1B, a communication method provided in embodiments of this disclosure may be applied to a communication system 100, for example, a wireless communication system like 5G or satellite communication. In the communication system 100, a terminal device 110, access network devices 120 and 130, and core network devices 140 and 150 are shown. A network 160 and a network 170 may be different networks. For example, the network 160 may be a first network (for example, an operator network, which may be specifically a public land mobile network (public land mobile network, PLMN)), and the network 170 may be a second network (for example, a subnet like a campus network, which may be specifically a non-PLMN). The network 160 may include the core network device 140 serving the network 160 and the access network device 120 whose service coverage includes a coverage area of the network 160. The network 170 may include the core network device 150 serving the network 170 and the access network device 130 whose service coverage includes a coverage area of the network 170. The terminal device 110 may access the corresponding network 160 or 170 through the access network device 120 or 130. For example, the terminal device 110 accesses the network 160 through the access network device 120. When a location of the terminal device 110 changes from being in the coverage area of the network 160 to being in the coverage area of the network 170, the access network device 120 may trigger RRC redirection or handover, to enable the terminal device 110 in the coverage area of the network 170 to be served by the access network device 130 and the core network device 150 in the network 170.

The communication system 100 in embodiments of this disclosure includes but is not limited to a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access 2000, CDMA2000) system, a time division-synchronous code division multiple access (time division-synchronous code division multiple access, TD-SCDMA) system, a long term evolution (long term evolution, LTE) system, and three major application scenarios of a 5G mobile communication system: eMBB, URLLC, and eMTC.

It should be understood that the foregoing wireless communication system is applicable to a high-frequency scenario (above 6G), for example, a millimeter wave, and is also applicable to a low-frequency scenario (sub 6G). An application scenario of the wireless communication system includes but is not limited to: communication systems such as a 5th generation (5G) system and a new radio (new radio, NR) communication system, or a future communication system, for example, a future evolved public land mobile network (public land mobile network, PLMN) system.

The term "terminal" or "terminal device" used in embodiments of this disclosure indicates any terminal device that can perform wired or wireless communication with a network device or another terminal device. The terminal device may sometimes be referred to as user equipment (User Equipment, UE). The terminal device may be any type of mobile terminal, fixed terminal, or portable terminal. The terminal device may be any wireless communication device with a wireless communication function. For example, the terminal device (the terminal device 110 shown in FIG. 1B) may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, or a terminal device. The terminal device may alternatively be a communication chip with a communication module, or may be a vehicle with a communication function, a vehicle-mounted device (for example, a vehicle-mounted communication apparatus or a vehicle-mounted communication chip), or the like. The terminal device may have a wireless transceiver function, and can communicate (for example, perform wireless communication) with one or more network devices of one or more communication systems, and receive a network service provided by the network device. The network device herein includes but is not limited to the access network devices 120 and 130 shown in FIG. 1B.

For example, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a compute device or another processing device connected to a wireless modem, a vehicle-mounted device, a wearable device, a terminal apparatus in a future 5G network, or a terminal apparatus in a future evolved PLMN network.

For another example, the terminal device may be specifically a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home).

In addition, the terminal device may be deployed on land, including being deployed indoors or outdoors, or in a handheld manner or a vehicle-mounted manner; or the terminal device may be deployed on water (for example, on a ship); or the terminal device may be deployed in the air (for example, on an airplane, a balloon, or a satellite). The network device may be an access network device (or referred to as an access network station). The access network device is a device that provides a network access function, for example, a radio access network (radio access network, RAN) base station. The network device may specifically include a base station (base station, BS), or include a base station, a radio resource management device for controlling the base station, and the like. The network device may alternatively include a relay station (relay device), an access point, a base station or an NR base station in a 5G network, a base station in a future evolved PLMN network, or the like. The network device may be a wearable device or a vehicle-mounted device. The network device may alternatively be a communication chip with a communication module.

The term "network node" or "network device" used in embodiments of this disclosure is an entity or a node that may be configured to communicate with a terminal device, for example, may be an access network device. The access network device may be an apparatus that is deployed in a radio access network and that provides a wireless communication function for a mobile terminal, for example, may be a radio access network (Radio Access Network, RAN) network device. The access network device may include various types of base stations. The base station is configured to provide a wireless access service for a terminal device. For example, the network device (for example, the access network devices 120 and 130) includes but is not limited to a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB, or a home NodeB, HNB), a baseband unit (baseband unit, BBU), a transmitting and receiving point (transmitting and receiving point, TRP), a transmitting point (transmitting point, TP), and a mobile switching center, or may be an evolved (evolved) NB (eNB or eNodeB) in LTE, or may be a base station device in a future 5G network or an access network device in a future evolved PLMN network, or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements a part of functions of the network device, and the DU implements a part of functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and functions related to an active antenna. Information at the RRC layer is finally converted into information at the PHY layer, or is obtained by converting information at the PHY layer. Therefore, in this architecture, higher layer signaling, for example, RRC layer signaling, may also be considered as being sent by the DU or sent by the DU and the AAU. It can be understood that the network device may be a device including one or more of a CU node, a DU node, and an AAU node. In addition, the CU may be categorized as a network device in an access network (radio access network, RAN), or the CU may be categorized as a network device in a core network (core network, CN). This is not limited in this application. Examples of the network device include but are not limited to a NodeB (NodeB or NB), an evolved NodeB (eNodeB or eNB), a next-generation NodeB (gNB), a transmission reception point (TRP), a remote radio unit (RRU), a radio head (RH), a remote radio head (RRH), an IAB node, and a low power node, for example, a femto node, a pico node, a reconfigurable intelligent surface (RIS), or a network-controlled repeater.

In addition, the network device, for example, the access network devices 120 and 130, may be connected to a core network (core network, CN) device (for example, the core network devices 140 and 150), and the core network devices 140 and 150 may be configured to provide core network services for the access network devices 120 and 130 and the terminal device 110. The core network devices 140 and 150 may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

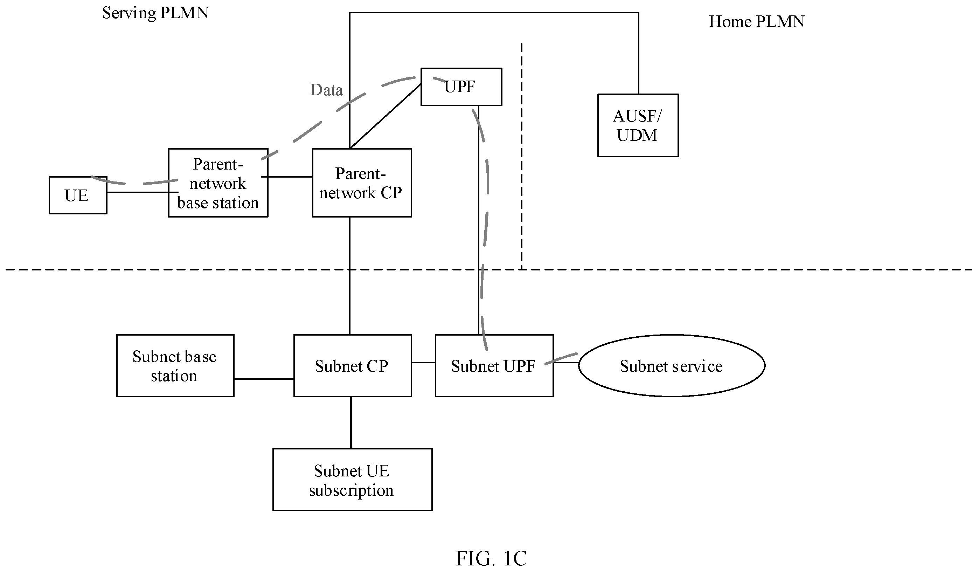

FIG. 1C is a diagram of an architecture of a communication system according to some embodiments of this disclosure. In the architecture shown in FIG. 1C, a subnet UE subscription is used to manage subscription data and policies of a subnet user. This function may be deployed in a campus of a subnet tenant in an on-premises mode. A subnet CP is configured to: when UE accesses a subnet, determine, based on a subnet user subscription, whether to allow the UE to access the subnet. A subnet UP (namely, a subnet UPF in FIG. 1C, for example, an SN-UPF) is responsible for forwarding user plane data between the UE and a subnet service. A subnet base station is configured to: when the UE is in a coverage area of the subnet, enable the UE to access the subnet through the subnet base station. A parent-network CP is responsible for mobility management and session management of the UE when the UE performs access through a parent-network base station. A parent-network UP (namely, a UPF in FIG. 1C) is responsible for forwarding user plane data between the parent-network base station and the subnet when the UE performs access through the parent-network base station. The parent-network base station is configured to: when the UE moves out of the coverage area of the subnet, enable the UE to access the subnet through the parent-network base station. In some examples, the subnet CP may be a subnet AMF and/or a subnet SMF, and the parent-network CP may be a parent-network AMF and/or a parent-network SMF. The architecture may support the UE in accessing a campus network (namely, the subnet) through a serving PLMN (public land mobile network). In some examples, when the UE is in a coverage area of the serving PLMN, the subnet AMF requested, through an AMF of the serving PLMN, to authorize access from the UE. Authentication on the UE may be performed by the subnet AMF. In this case, the subnet AMF may perform authentication on the UE through an AUSF/UDM interface of an HPLMN (Home PLMN, home public land mobile network). Authentication on the UE may alternatively be performed by the parent-network AMF. In this case, the parent-network AMF may directly perform authentication on the UE through an AUSF/UDM interface of an HPLMN.

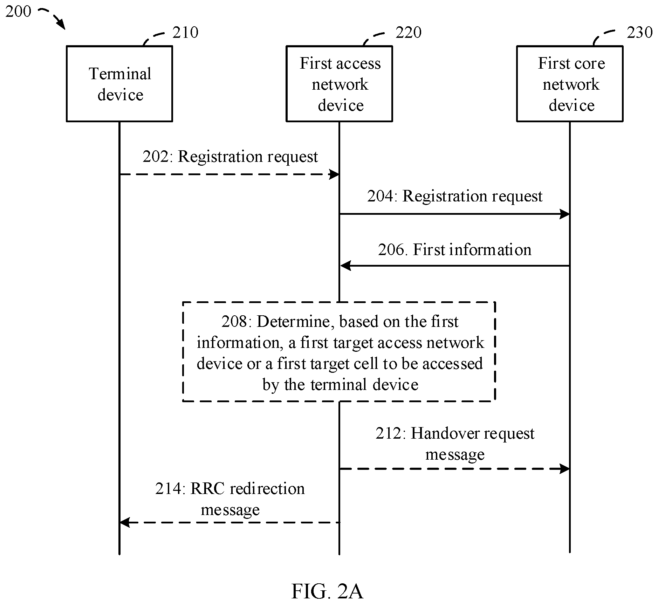

FIG. 2A is a diagram of a communication process according to some embodiments of this disclosure. As shown in FIG. 2A, in the process 200, a terminal device 210 may be an example of the terminal device 110, a first access network device 220 may be an example of the access network device 120, a first core network device 230 may be an example of the core network device 140, the first access network device 220 and the first core network device 230 are network elements in a first network (for example, the network 160), and an example of the first network may be an operator network, or referred to as a parent network. In some other examples, the first access network device 220 may be an example of the access network device 130, the first core network device 230 may be an example of the core network device 150, the first access network device 220 and the first core network device 230 are network elements in a second network (for example, the network 170), and an example of the second network may be a campus network, or referred to as a subnet. In some embodiments, an example of the terminal device 110 may be UE. An example of the first access network device 220 may be a base station, for example, a base station whose service coverage includes a coverage area of the first network or the second network. An example of the first core network device 230 may be specifically a network element with a control plane (CP, control plane) function in a core network, for example, an AMF (Access and Mobility Management Function, access and mobility management function) and/or an SMF (Session Management Function, session management function) in the first network or the second network. In some of the following examples, a parent-network AM/SM is an AMF/SMF in a parent network, and a subnet AM/SM is an AMF/SMF in a subnet. The foregoing devices, functions, or network elements are not limited to the specific examples listed above.

In 204, the first core network device 230 receives a registration request for requesting access of the terminal device 210 to the second network. Specifically, when the terminal device 210 accesses the second network through the first access network device whose service coverage includes the coverage area of the first network or the second network, as shown in 202, the terminal device 210 may send the registration request to the first access network device 220, and the first access network device 220 receives the registration request, and sends the registration request to the corresponding first core network device 230, so that the first core network device 230 receives the registration request. After receiving the registration request, the first core network device 230 determines to allow the terminal device 210 to access the second network. In some examples, the first core network device 230 may determine, based on information about a service area of the second network, to allow the terminal device 210 to access the second network. For example, if the service area of the second network does not include a current location of the terminal device 210, access from the terminal device 210 is rejected; otherwise, access from the terminal device 210 is allowed. In some other examples, the first core network device 230 is a core network device serving the first network. In this case, the first core network device 230 may obtain subscription information of the second network in the first network (or referred to as subscription information of the second network, which is subscription information at a network granularity). If the subscription information includes a service area of the second network and the service area of the second network includes a current location of the terminal device 210, the first core network device 230 determines to allow access from the terminal device 210; otherwise, the first core network device 230 does not allow access from the terminal device 210. In still some other examples, the first core network device 230 is a core network device serving the first network. In this case, the first core network device 230 may send an access request to a core network device (referred to as a second core network device) serving the second network, where the access request is used to request the second core network device to authorize the terminal device 210 to access the second network. When receiving an authorization accept indication sent by the second core network device, the first core network device 230 determines, based on the authorization accept indication, to allow the terminal device 210 to access the second network. If the second core network device does not authorize access from the terminal device 210, the first core network device 230 rejects access from the terminal device 210 to the second network. In some examples, the access request includes identification information of the terminal device, and the identification information of the terminal device includes at least one of the following: a mobile station international subscriber directory number (MSISDN), a subscription concealed identifier (SUCI), or a temporary identifier. In some embodiments, a specific implementation of determining to allow access from the terminal device 210 may be one or a combination of the examples listed above.

In 206, when allowing the terminal device 210 to access the second network, the first core network device 230 sends first information to the first access network device 220 serving the terminal device 210. The first information indicates that, when a target access network device or a target cell for accessing the second network is selected for the terminal device 210 is preferentially selected, an access network device or a cell whose service coverage includes the coverage area of the second network. Herein and in the entire specification, "an access network device or a cell whose service coverage includes the coverage area of the second network" may be replaced with "an access network device or a cell that provides a service for the second network", or replaced with "an access network device or a cell that broadcasts identification information (namely, a subnet identifier) of the second network". Similarly, a person skilled in the art may understand that, that the service coverage of the access network device or the cell includes the coverage area of the second network correspondingly has a same specific meaning as that of the following expressions: The access network device or the cell provides a service for the second network; or the access network device or the cell broadcasts the identification information of the second network. In some examples, the first information includes the identification information of the second network, or a cell list (including information about one or more cells whose service coverage includes the coverage area of the second network), or an access network device list (including information about one or more access network devices whose service coverage includes the coverage area of the second network), or one or a combination of the foregoing information. In this way, when selecting a target access network device or a target cell, if an access network device or a cell serving the second network is available, the first core network device 230 preferentially selects the access network device or the cell serving the second network, so that the terminal device 210 can directly access the subnet through the access network device or the cell (instead of remotely accessing the subnet through a parent-network base station).

In some embodiments, on the first access network device 220 side, after the first access network device 220 receives the first information, when a location of the terminal device 210 moves from a network (that is, a source network) corresponding to the service coverage of the first access network device to a coverage area of another network (that is, a target network), the first access network device 220 serves as a source access network device. In this case, in 208, the first access network device 220 may determine, based on the first information, a first target access network device or a first target cell to be accessed by the terminal device 210. In 212, the first access network device 220 sends a handover request message to a core network device serving the terminal device 210, where the handover request message includes identification information of the first target access network device or identification information of the first target cell. Alternatively, in 214, the first access network device 220 sends a radio resource control (RRC) redirection message to the terminal device 210, where the RRC redirection message indicates the terminal device 210 to reselect the first target access network device or the first target cell to access the target network. In some examples, when the target network is the second network, the handover request message may indicate that the first target access network device or the first target cell serves the second network. In some examples, the first access network device 220 may receive measurement reporting information of the first target cell from the terminal device 210, where the measurement reporting information includes identification information of the target network; and the first access network device 220 may determine, based on the identification information of the target network, that a service coverage of the first target access network device or the first target cell to be accessed by the terminal device 210 includes a coverage area of the target network. In some examples, the measurement reporting information includes the identification information of the second network only when the target network is the second network. In other words, when the target network is the first network, the measurement reporting information may not include identification information of the first network. Optionally or alternatively, the first access network device 220 may receive indication information, where the indication information indicates that a service coverage of the first target access network device or the first target cell to be accessed by the terminal device 210 includes the coverage area of the second network. In some examples, the indication information may be obtained through information exchange through an inter-device interface between the first access network device 220 and the first target access network device. For example, the first target access network device sends the indication information to the first access network device 220 through information exchange. Optionally or alternatively, the first access network device 220 may determine, based on local configuration information, that a service coverage of the first target access network device or the first target cell includes the coverage area of the second network. In some embodiments, the first access network device 220 may alternatively send indication information to the terminal device 210, where the indication information indicates the terminal device 210 to perform measurement on the first target cell, where measurement reporting information includes identification information of the target network, and the target network is a network served by the first target cell. In some examples, the terminal device 210 performs measurement on the first target cell, reads a first system information broadcast (SIB) field of the first target cell, obtains an identifier of a network served by the first target cell, and sends measurement reporting information, where the measurement reporting information includes the identifier of the network served by the first target cell. In some implementations, the indication information further indicates to include an identifier of the target network in the measurement reporting information when the target network is the second network. To be specific, the terminal device does not need to include the identification information of the target network in each piece of measurement reporting information, but includes the identification information of the target network in the measurement reporting information only when the first target cell is a cell serving the second network. When the service coverage of the first target cell includes the coverage area of the second network (that is, when the first target cell serves the second network), the measurement reporting information includes the identification information of the second network. In some examples, when there is an access network device or a cell whose service coverage includes the coverage area of the second network among a neighboring access network device or a neighboring cell of an access network device or a cell currently accessed by the terminal device 210, the first access network device 220 selects, from the access network device or the cell in the coverage area of the second network, the first target access network device or the first target cell to be accessed by the terminal device 210.

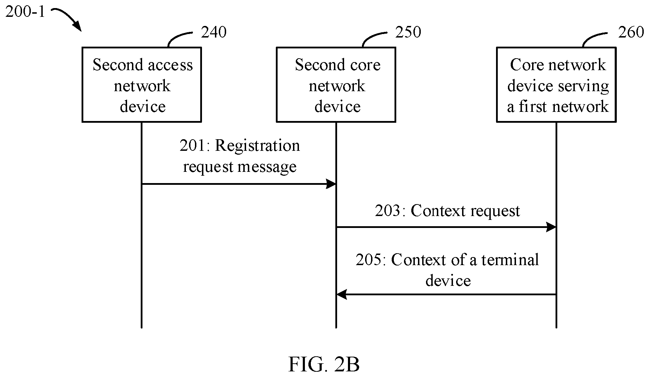

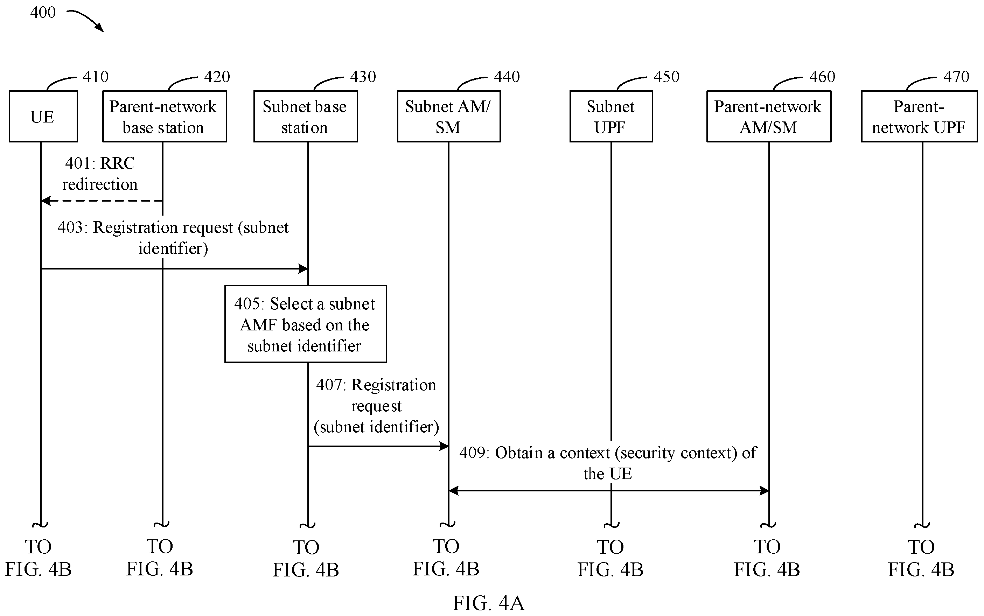

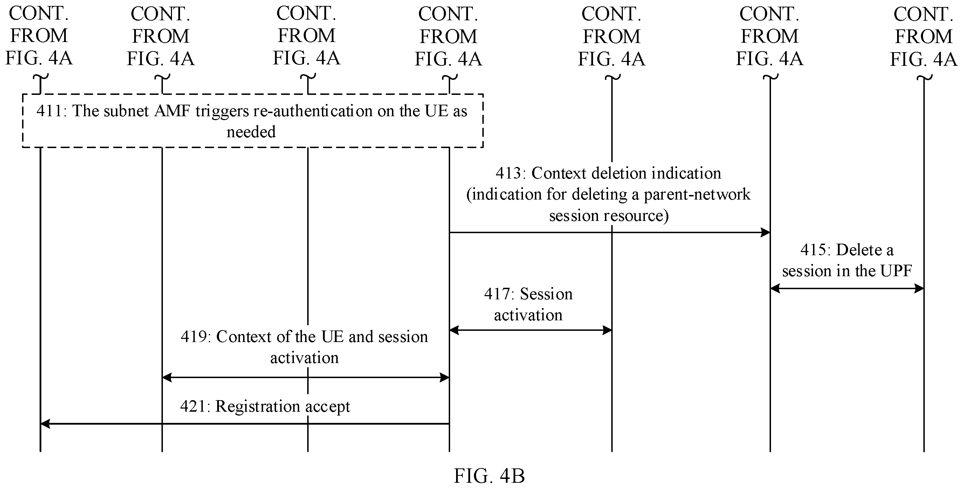

In some embodiments, the first core network device 230 is a core network device serving the first network. For example, in an example scenario in which the terminal device 210 in an idle state moves from the first network to the second network (for details, refer to an example in FIG. 4A and FIG. 4B below), the first core network device 230 may receive a context request from the second core network device, where the second core network device serves the second network, the context request is used to obtain a context of the terminal device 210, and the context request may include first indication information indicating that the second core network device serves the second network. The first core network device 230 may send the context of the terminal device 210 to the second core network device based on the first indication information, where the context may not include sensitive information of the terminal device 210. This example may be further described in detail with reference to embodiments shown in FIG. 2B, FIG. 4A, and FIG. 4B below. For example, refer to the following operations in FIG. 2B: A core network device 260 serving the first network receives a context request from a second core network device 250, and the core network device 260 serving the first network sends the context of the terminal device to the second core network device 250. Alternatively, refer to the following operations in FIG. 4A and FIG. 4B: A subnet AM/SM 440 (an example of the second core network device) obtains (409) a context of UE (an example of the terminal device 210) from a parent-network AM/SM 460 (an example of the core network device serving the first network). In some examples, the first core network device 230 may first determine that the second core network device has permission to obtain the context of the terminal device 210, and send the context of the terminal device 210 based on that the second core network device has the permission. In some examples, the first core network device 220 may receive, from the second core network device, second indication information indicating deletion of the context of the terminal device 210; and the first core network device 210 may delete, based on the second indication information, the context of the terminal device 210 on the first core network device and a session resource corresponding to the terminal device 210. For details, refer to operations 413 and 415 in an embodiment shown in FIG. 4A and FIG. 4B.

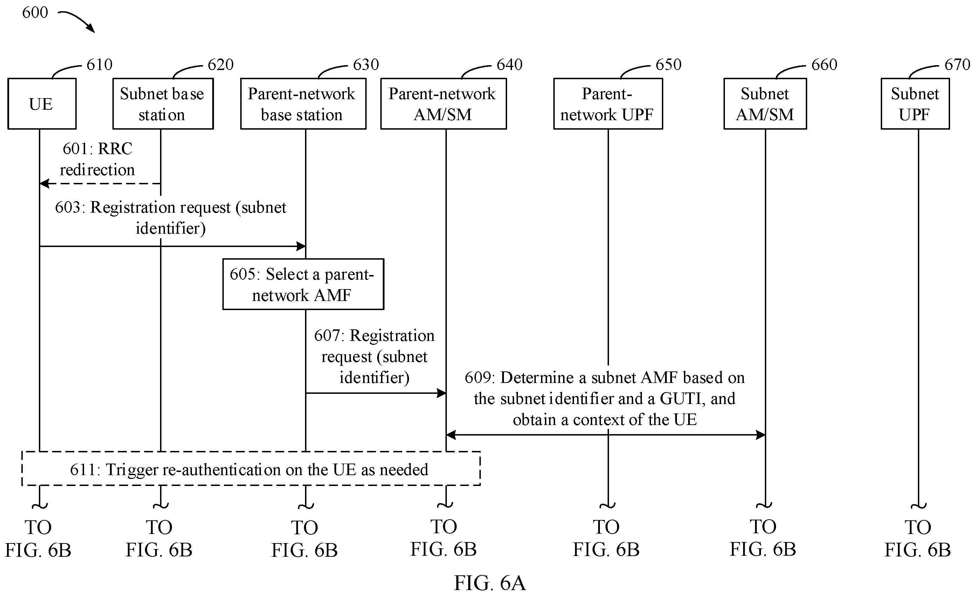

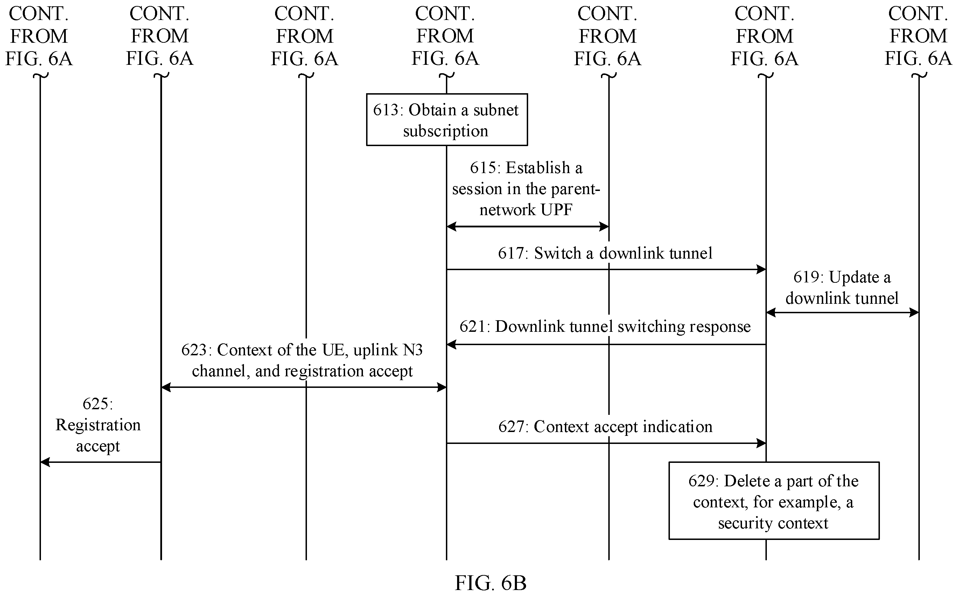

In some other embodiments, the first core network device 230 is a core network device serving the first network. For example, in an example scenario in which the terminal device 210 in an idle state moves from the second network to the first network, a registration request includes identification information of the terminal device 210, and the identification information is an identifier allocated by the second core network device serving the second network. The first core network device 230 determines the second core network device based on the identification information, and sends a context request to the second core network device, where the context request is used to obtain a context of the terminal device 210, and the context request includes the identification information of the terminal device 210. The first core network device 230 receives the context of the terminal device 210 from the second core network device. For details, refer to operation 609 in an embodiment shown in FIG. 6A and FIG. 6B.

When the first core network device 230 is a core network device serving the first network, the first core network device 230 may store address information of the second core network device in the context of the terminal device 210.

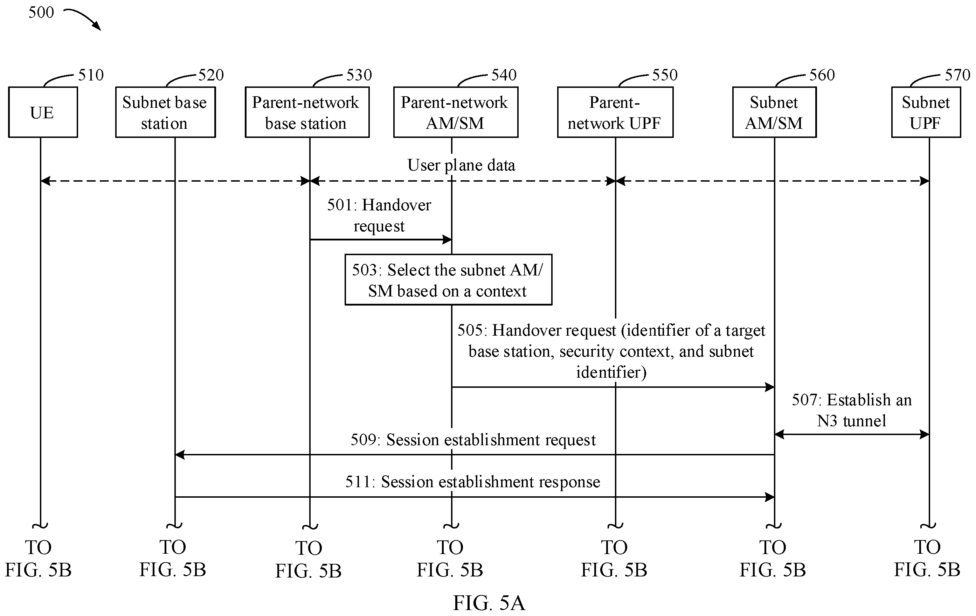

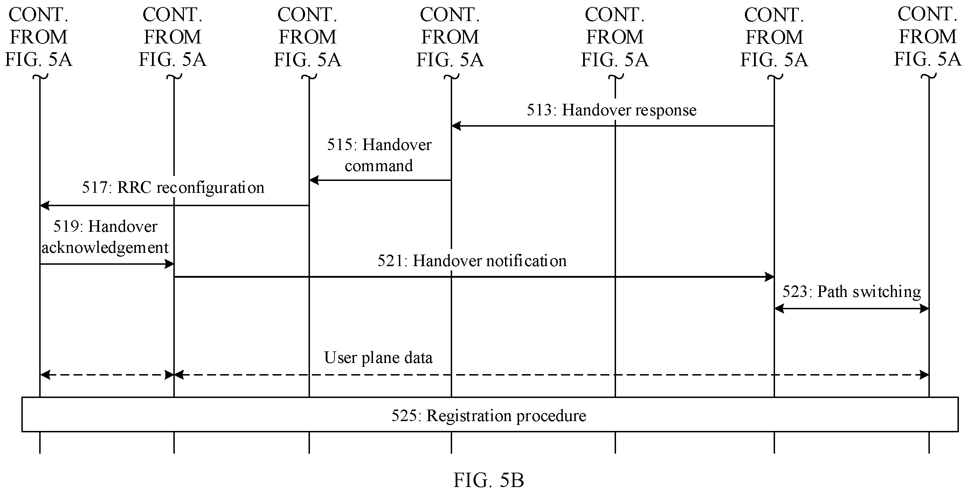

In some embodiments, the first core network device is a core network device serving the first network. For example, in an example scenario in which the terminal device 210 in a connected state moves from the coverage area of the first network to the coverage area of the second network (for a specific example, refer to an example shown in FIG. 5A and FIG. 5B below), the first access network device 220 is an access network device whose service coverage includes the coverage area of the first network. The first core network device 230 may receive a handover request message from the first access network device 220, where the handover request message includes identification information of a target access network device or a target cell to be accessed by the terminal device 210. The first core network device 230 selects, based on that the target access network device or the target cell serves the second network, the second core network device serving the second network; and the first core network device 230 sends a context of the terminal device 210 to the second core network device, where the context does not include sensitive information of the terminal device 210. The target access network device or the target cell serves the second network. In other words, the target access network device or the target cell to be accessed by the terminal device 210 is an access network device or a cell whose service coverage includes the coverage area of the second network. In some examples, the first core network device 230 determines, based on that a network currently accessed by the terminal device 210 is the second network, to select the second core network device serving the second network. To be specific, when the to-be-accessed target access device or target cell serves the second network and the terminal device 210 accesses the second network through the first network before handover, the first core network device 230 selects the second core network device serving the second network. In some examples, the first core network device 230 may further send a handover request message to the second core network device serving the second network, where the handover request message sent to the second core network device includes the identification information of the target access network device and the context of the terminal device. In some examples, the context of the terminal device does not include sensitive information. In some examples, based on that the target access network device or the target cell indicated by the handover request message and to be accessed by the terminal device serves the second network, and/or based on that the service area of the second network includes a service area of the target access network device or the target cell to be accessed by the terminal device, the first core network device 230 determines that the target access network device or the target cell to be accessed by the terminal device 210 is an access network device or a cell whose service coverage includes the coverage area of the second network. Subscription information of the second network includes a service area of the second network, and the first core network device 230 may determine the service area of the second network based on the subscription information of the second network.

In some examples, the first core network device 230 sends second information to the first access network device 220. Correspondingly, the first access network device 220 receives the second information from the first core network device 230. The second information indicates that, when a target access network device or a target cell for accessing the second network is selected for the terminal device 210, an access network device or a cell whose service coverage includes an area, in the coverage area of the second network, that the terminal device 210 is allowed to access is selected. For a specific example of the second information, refer to mobility restriction information sent to a base station below. The first core network device 230 sends third information to the terminal device 210. The third information indicates the terminal device 210 to: when selecting a target access network device or a target cell for accessing the second network, select an access network device or a cell whose service coverage includes an area, in the coverage area of the second network, that the terminal device 210 is allowed to access. For a specific example of the third information, refer to mobility restriction information sent to a terminal device (for example, UE) below. In some examples, the first core network device 210 is a core network device serving the first network, and the first core network device 210 obtains the mobility restriction information (to be specific, information about the area, in the coverage area of the second network, that the terminal device 210 is allowed to access) from the second core network device, where the second core network device is a core network device serving the second network.

In some examples, the first core network device 210 is a core network device serving the first network, and the first access network device 220 is an access network device serving the first network. For example, in an example scenario in which the terminal device 210 is handed over between access network devices during movement in the first network, the first core network device 230 may receive a handover request message sent by the first access network device 220, where the handover request message indicates a target access network device or a target cell to be accessed by the terminal device 210; and select, based on determining that the target access network device or the target cell to be accessed by the terminal device 210 is an access network device or a cell whose service coverage includes the coverage area of the first network, a core network device (which may be referred to as a third core network device) serving the first network, to serve the terminal device. The first core network device 210 sends a context of the terminal device to the third core network device, where the context includes information about the second core network device serving the second network and the identification information of the second network, and the identification information of the second network indicates that a network accessed by the terminal device 210 is the second network.

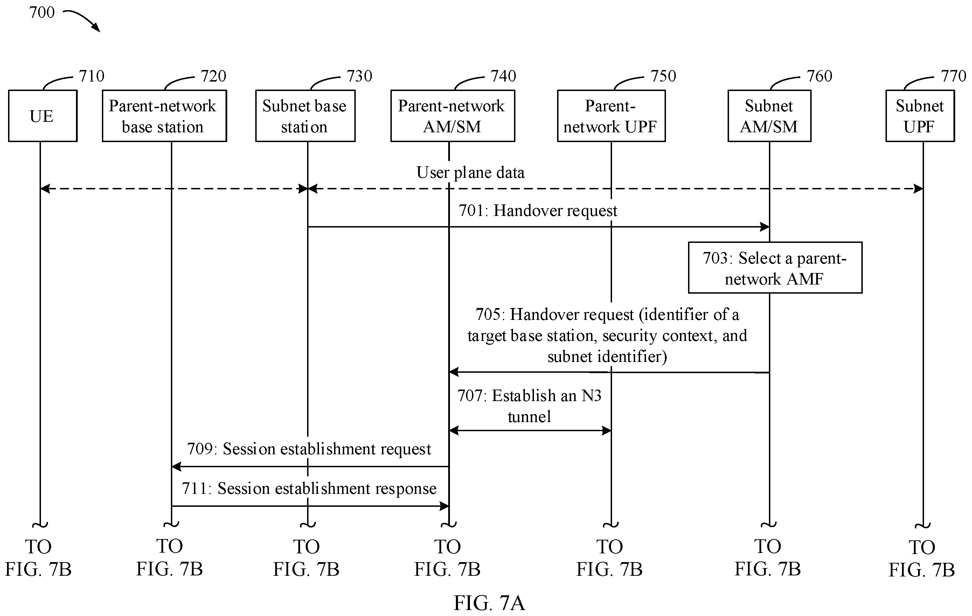

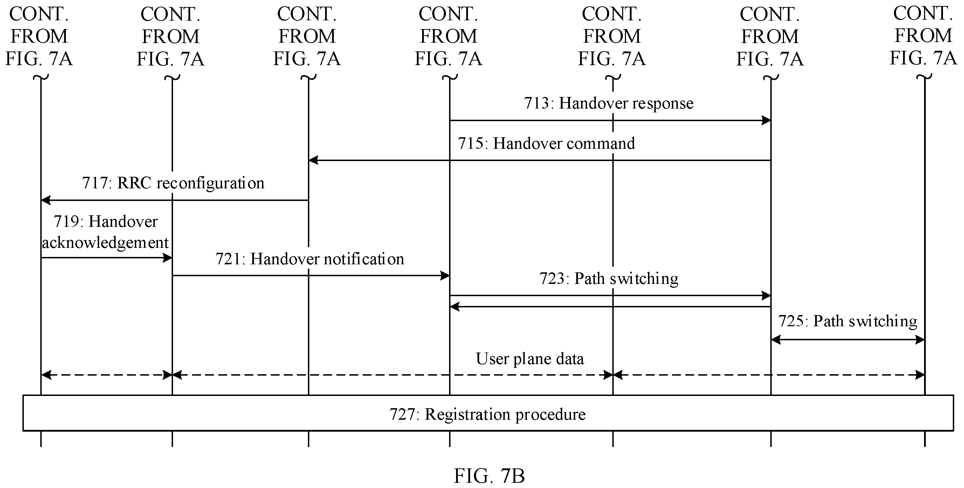

In some embodiments, for example, in a handover scenario in which the terminal device 210 in a connected state is handed over from an access network device whose service coverage includes the coverage area of the second network to an access network device whose service coverage includes the coverage area of the first network (for details, refer to an example shown in FIG. 7A and FIG. 7B below), at the second core network device, the second core network device receives a handover request message sent by the first access network device 220 serving the terminal device 210, where the handover request message indicates a target access network device or a target cell to be accessed by the terminal device 210; and selects, based on determining that the target access network device or the target cell is an access network device or a cell serving the first network, a core network device serving the first network, to serve the terminal device 210. The second core network device may determine, based on one or more of the following factors, that the target access network device or the target cell to be accessed by the terminal device 210 is an access network device or a cell serving the first network. For example, a first factor may be: The handover request message sent by the first access network device 220 serving the terminal device 210 indicates that the target access network device or the target cell is an access network device or a cell serving the first network. A second factor may be: A service area of the target access network device or the target cell is outside the coverage area of the second network, where the service area of the second network is indicated by first subscription information of the second network in the first network. In another example, the first factor and the second factor may be combined. In some examples, the second core network device may further send a handover request message to the core network device serving the first network, where the handover request message includes the identification information of the second network, or a context of the terminal device, or callback address information of the core network device serving the second network, or a combination thereof. The callback address information is used to exchange a message between the core network device serving the first network and the core network device serving the second network, and the identification information of the second network indicates that the terminal device 210 accesses the second network.

FIG. 2B is a diagram of a communication process according to some other embodiments of this disclosure. For the process 200-1, refer to related descriptions of the case in which the first core network device 230 is a core network device serving the second network (that is, the second core network device) in the process 200. In 201, a second core network device 250 serving a second network receives a registration request message from a terminal device (not shown in FIG. 2B), where the registration request message is used to request access of the terminal device to the second network, and the registration request message includes identification information of the terminal device. The registration request message may be received by a second access network device 240 from the terminal device and sent to the second core network device 250. In 203, the second core network device 250 sends, based on the identification information of the terminal device, a context request to a core network device serving a first network, where the context request is used to obtain a context of the terminal device 210, and the context request includes first indication information indicating that the second core network device 250 serves the second network. In 205, the second core network device 250 receives the context of the terminal device from the core network device serving the first network, where the context of the terminal device does not include sensitive information of the terminal device.

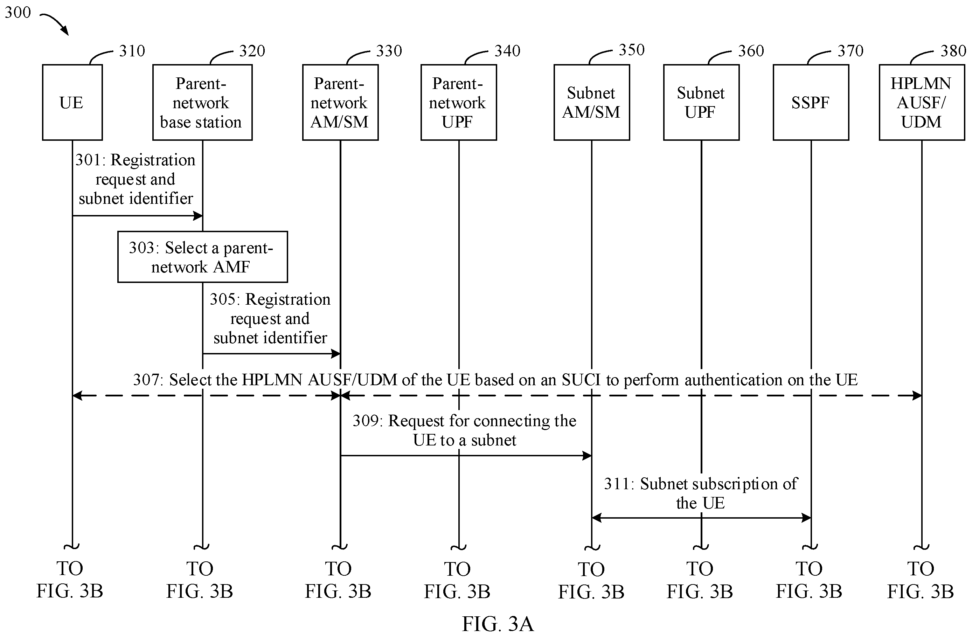

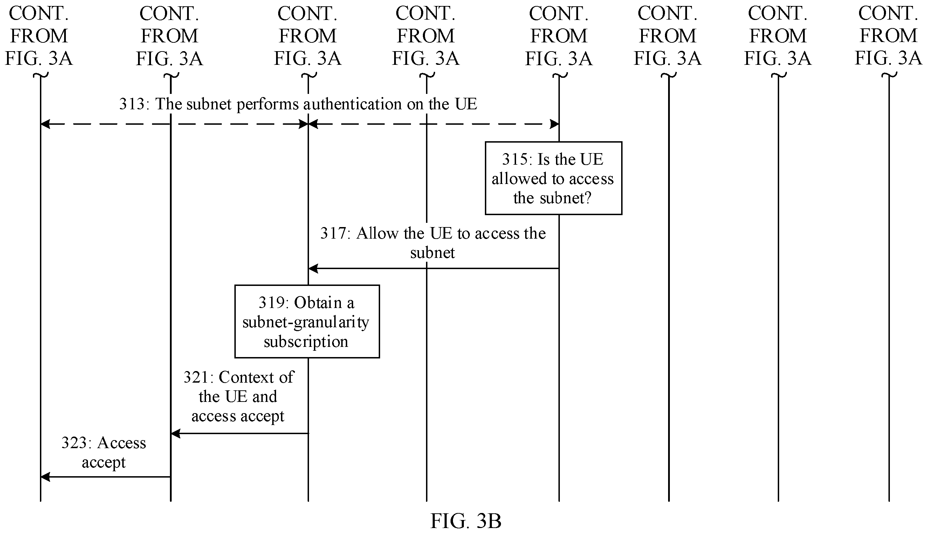

FIG. 3A and FIG. 3B are a diagram of a communication process in an example scenario according to some embodiments of this disclosure. Specifically, FIG. 3A and FIG. 3B show a process 300 in which a terminal device registers with a subnet through a parent-network base station when the terminal device is outside a coverage area of the subnet. The subnet is, for example, a network deployed in an enterprise, a campus, a stadium, or the like, and is used for a subnet user to connect to and access a subnet service provided by a subnet site. An owner of the subnet site may be referred to as a subnet tenant, and a visitor of the subnet site or a member/employee of the subnet site may be referred to as a subnet user. The subnet tenant may provide a subnet service. For example, the subnet tenant provides the following services for the subnet user: XR gaming, AR navigation at the site, immersive conferencing, and the like. A party that deploys the subnet for the subnet tenant to provide access for the subnet user who visits the subnet site may be referred to as a subnet operator. When the terminal device registers with the subnet through a parent-network CP (for example, an AMF), the parent-network CP still requests a subnet CP (for example, a subnet AMF) to authorize access from the terminal device. In the process 300, a parent network is an example of a first network, and the subnet is an example of a second network. UE 310 shown in FIG. 3A is an example of the terminal device. A parent-network base station 320 is an example of an access network device serving the first network. A parent-network AM/SM 330 is an example of a control plane (CP) function serving the first network. A parent-network UPF 340 is an example of a user plane (UP) function serving the first network. A subnet AM/SM 350 is an example of a control plane function serving the second network. A subnet UPF 360 is an example of a user plane function serving the second network. An SSPF 370 corresponds to a subscription of a subnet terminal device (for example, UE), and is specifically configured to store subscription information of a subnet user. An HPLMN AUSF/UDM 380 is an AUSF (an authentication server network element), in an HPLMN (a home operator of a SIM card of the terminal device), that provides SIM card-based authentication, or a UDM (a subscriber server of an operator), in an HPLMN, that is configured to store subscription information of the UE in a home operator network of the UE. It should be noted that network elements or functions in steps of the following process are described by using examples corresponding to the network elements or the functions, but are not limited to the examples, and may alternatively be other examples of the corresponding network elements or functions.

In 301, when the UE 310 expects to access the subnet, the UE 310 may send a registration request to the parent-network base station 320, where the registration request message may carry a subnet identifier. The UE 310 may alternatively send the subnet identifier to the parent-network base station 320 through an access stratum message (for example, an RRC message), so that the parent-network base station 320 selects an appropriate parent-network CP (for example, a parent-network AM/SM 330) based on the subnet identifier. If the terminal device sends the subnet identifier, in 303, the parent-network base station 320 may select the parent-network AM/SM 330 based on the subnet identifier, where a function of the parent-network AM/SM 330 supports the UE 310 in accessing the subnet. In 305, the parent-network base station 320 may send a registration request to the parent-network AM/SM 330, and the base station may further send, to the parent-network AM/SM 330, the subnet identifier received from the terminal device. In 307, the parent-network AM/SM 330 triggers authentication on the UE 310. A home operator of a SIM card of the UE 310 may not be an operator corresponding to a current parent network, and the parent-network AM/SM 330 requests the home operator of the SIM card of the UE 310 to perform authentication on the SIM card. For example, the HPLMN AUSF/UDM 380 corresponding to the UE 310 is selected based on an SUCI to perform authentication on the UE 310. In 309, the parent-network AM/SM 330 sends, to a subnet CP (for example, the subnet AM/SM 350), a request message for connecting the UE 310 to the subnet, where the message is used to request the subnet AM/SM 350 to authorize access from the UE 310. In some examples, the parent-network AM/SM 330 may send an MSISDN to the subnet AM/SM 350 as an identifier of the UE 310. In some other examples, the parent-network AM/SM 330 may alternatively send, to the subnet AM/SM 350 as an identifier of the UE 310, an SUCI or a temporary identifier allocated by the AUSF/UDM. In some examples, the MSISDN may alternatively be used as an identifier of the UE 310 in the subnet, and a subscription of the UE 310 in the subnet may be indexed by using the identifier (for example, the SUCI or the temporary identifier may not be used as an identifier of the UE 310 in the subnet).

In 311, the subnet AM/SM 350 obtains the subscription of the UE 310 in the subnet. In some examples, if the request message sent by the parent-network AM/SM 330 to the subnet AM/SM 350 in 309 includes a trusted identifier of the UE 310 in the subnet, the subnet AM/SM 350 obtains the subscription of the UE 310 in the subnet based on the identifier of the UE 310 in the subnet. The MSISDN obtained by the parent-network AM/SM 330 from the AUSF/UDM and sent to the subnet AM/SM 350 may be used as a trusted identifier of the UE 310 in the subnet. In some other examples, if the request message sent by the parent-network AM/SM 330 to the subnet AM/SM 350 in 309 does not include a trusted identifier of the UE 310 in the subnet, the subnet AM/SM 350 may obtain an identifier of the UE 310 in the subnet through 313, and obtain the subscription of the UE in the subnet based on the identifier of the UE 310 in the subnet.

The subnet AM/SM 350 may perform authentication on the UE 310 as needed, as shown in 313. In 313, the subnet AM/SM 350 determines, as needed, to initiate authentication on the UE 310. In some examples, the subnet AM/SM 350 may be configured to always perform authentication on the UE 310. Alternatively, in some other examples, the subnet AM/SM 350 may trust authentication performed by the parent-network AM/SM 330 on the UE 310, and therefore does not perform authentication on the UE 310. Alternatively, when an identifier of the UE 310 in the subnet is allocated by the subnet and the parent-network AM/SM 330 cannot perform verification on the identifier, the subnet AM/SM 350 performs authentication on the UE 310. In some examples, the subnet AM/SM 350 performs authentication on the UE 310. Specifically, the subnet AM/SM 350 may perform authentication on the UE 310 based on the SIM card. If authentication is based on the SIM card, the subnet AM/SM 350 needs to request the home operator of the SIM card to perform authentication (this is the same as or similar to operation 307). In some other examples, the subnet AM/SM 350 may alternatively use another authentication mode, for example, an authentication mode similar to OAUTH: The UE 310 obtains a token (token) from the AUSF/UDM 380 and sends the token to the subnet, and the subnet performs authentication on the UE 310 based on the token. Certainly, authentication may alternatively be performed on the UE 310 in another manner. A specific manner of performing authentication on the UE by the subnet CP is not limited in this embodiment of this disclosure.

In 315, the subnet AM/SM 350 authorizes the UE 310 to access the subnet. Specifically, the subnet AM/SM 350 may authorize access from the UE 310 based on the subscription, obtained from the SSPF 370, of the UE 310 in the subnet, for example, determine whether to allow the UE 310 to access the subnet. In 317, the subnet AM/SM 350 sends, to the parent-network AM/SM 330, a response for allowing the UE 310 to access the subnet. For example, if allowing the UE to access the subnet, the subnet AM/SM 350 sends, to the parent-network AM/SM 330, an indication for allowing the UE 310 to access the subnet. The parent-network AM/SM 330 determines, based on the response, sent by the subnet AM/SM 350, for allowing the UE 310 to access the subnet, to allow the UE 310 to access the subnet. In some examples, if subscription information of the UE 310 in the subnet includes information about an area, in the coverage area of the subnet, that the UE 310 is allowed to access, the subnet AM/SM 350 further sends the information to the parent-network AM/SM 330, so that the parent-network AM/SM 330 determines mobility restriction information to be sent to the parent-network base station 320 and mobility restriction information to be sent to the UE 310.

In 319, the parent-network AM/SM 330 obtains subnet-granularity subscription information. The subnet-granularity subscription information is a subscription of the subnet in an operator network (the parent network). In some examples, the subnet-granularity subscription information may include information about an area in which subnet UE is allowed to access the subnet (that is, an access-allowed area) and information about a service area of the subnet. A subnet-granularity subscription is a subscription at a subnet granularity, to be specific, a subscription of the subnet in the parent network. The parent-network AM/SM 330 may determine, based on the information about the area in which the subnet UE is allowed to access the subnet, whether to allow the UE 310 to access the subnet. If a current location of the UE 310 is outside the area in which the subnet UE is allowed to access the subnet, access from the UE is rejected; otherwise, access from the UE is allowed. The parent-network AM/SM 330 further determines, based on the information about the area in which the subnet UE is allowed to access the subnet, mobility restriction information to be sent to the parent-network base station 320 and mobility restriction information to be sent to the UE 310. The mobility restriction information to be sent to the parent-network base station 320 is used for the parent-network base station 320 to select a target cell (cell) for the UE 310, so that when the UE 310 needs to be handed over, only an access-allowed cell is selected for handover. The mobility restriction information to be sent to the UE 310 is used for the UE 310 to select a target cell when the UE 310 moves in an idle state, so that only a cell in the access-allowed area is selected for access. The process shown in FIG. 3A and FIG. 3B is described by using an example in which the parent-network AM/SM 330 obtains the subnet-granularity subscription information in 319. Alternatively, the parent-network AM/SM 330 may obtain the subnet-granularity subscription information after 305, to be specific, after receiving the registration request from the UE 310. If the subnet-granularity subscription information is obtained after operation 305 and the area information of the subnet that is included in the subnet-granularity subscription information does not include a current location of the UE 310, operation 307 and a subsequent process may not be performed, and registration of the UE 310 is directly rejected.

In 321, if access from the UE is allowed, the parent-network AM/SM 330 sends a message including a context of the UE 310 to the parent-network base station 320. The message may include mobility restriction information. The message may further indicate the parent-network base station 320 to preferentially select a subnet base station when selecting a target base station. Specifically, the parent-network AM/SM 330 may include the subnet identifier in the message sent to the parent-network base station 320, and the parent-network base station 320 preferentially selects, based on the subnet identifier, a base station that supports the subnet. In some embodiments, the parent-network base station 320 may sense, based on a configuration, a nearby cell/base station that supports the subnet. Additionally or alternatively, when configuring measurement reporting information of the UE 310, the parent-network base station 320 may indicate the UE 310 to include, in the measurement reporting information, a subnet identifier supported by a cell; and the parent-network base station 320 may sense, based on the measurement reporting information of the UE 310, a nearby cell/base station that supports the subnet. Additionally or alternatively, the parent-network base station 320 senses, based on information exchange through an interface between base stations, a nearby cell/base station that supports the subnet. For example, a neighboring base station of the parent-network base station 320 may send, to the parent-network base station 320, a subnet identifier of a subnet served by a cell to which the neighboring base station belongs. In some other embodiments, the parent-network AM/SM 330 may determine, based on the coverage area of the subnet, a list of subnet cells adjacent to the parent-network base station 320, and send the list of subnet cells to the parent-network base station 320. The parent-network base station 320 preferentially selects, based on the cell list, a cell in the cell list for handover/redirection. The message sent by the parent-network AM/SM 330 to the parent-network base station 320 may include a registration accept message to be sent to the UE 310. The registration accept message includes mobility restriction information. In 323, the parent-network base station 320 may send the registration accept message to the UE 310.

FIG. 4A and FIG. 4B are a diagram of a communication process in an example scenario according to some other embodiments of this disclosure. Specifically, FIG. 4A and FIG. 4B show a process 400 in which a terminal device in an idle state moves from a coverage area of a parent network to a coverage area of a subnet. In the process 400, the parent network is an example of a first network, and the subnet is an example of a second network. UE 410 shown in FIG. 4A is an example of the terminal device. A parent-network base station 420 is an example of an access network device serving the first network. A subnet base station 430 is an example of an access network device serving the second network. A subnet AM/SM 440 is an example of a control plane function serving the second network. A subnet UPF 450 is an example of a user plane function serving the second network. A parent-network AM/SM 460 is an example of a control plane (CP) function serving the first network. A parent-network UPF 470 is an example of a user plane (UP) function serving the first network. It should be noted that network elements or functions in steps of the following process are described by using examples corresponding to the network elements or the functions, but are not limited to the examples, and may alternatively be other examples of the corresponding network elements or functions. In this embodiment, the parent-network base station 420 triggers RRC redirection, and hands over the UE 410 from the parent-network base station 420 to the subnet base station 430 through the process 400.

In 401, the parent-network base station 420 sends an RRC redirection message to the UE 410. The message may carry information about a target cell, to enable the UE 410 to select a specified cell. Refer to 321 in the process 300 shown in FIG. 3A and FIG. 3B. In a UE registration stage, a parent-network CP (for example, the parent-network AM/SM) may configure the parent-network base station, to enable the parent-network base station to: when selecting a target base station/target cell, preferentially select a base station/cell that supports the subnet. Alternatively, the parent-network CP may determine a list of subnet cells adjacent to the parent-network base station, and send the list of subnet cells to the parent-network base station, so that the parent-network base station preferentially selects, based on the list of subnet cells, a cell in the list of subnet cells for handover or redirection. The parent-network base station 420 selects a target cell for the UE 410 based on information about the preferentially selected subnet base station/cell. In this example, there is a target cell serving the subnet. Therefore, the target cell selected by the parent-network base station is a cell serving the subnet.

In 403, the UE 410 selects the subnet base station 430, and sends a registration request message to the subnet base station 430. If the UE 410 receives the RRC redirection message from the parent-network base station 420, the UE 410 may select a cell based on the information about the target cell in the redirection message. If the UE 410 does not receive the information about the target cell or does not receive the RRC redirection message or the UE 410 is in an idle state, the UE 410 may select a serving cell of the subnet based on a subnet identifier broadcast by the subnet base station 430. In some examples, the registration request message may carry the subnet identifier. In some examples, the registration request message may carry a temporary identifier of the UE. The temporary identifier is allocated by the parent-network CP. The temporary identifier includes information about the parent-network CP, and may be used to address the parent-network CP. The parent-network CP is, for example, the parent-network AM/SM 460. The UE 410 may alternatively include the subnet identifier in an access stratum (AS, Access Stratum) message for sending the registration request message.

In 405, the subnet base station 430 selects a subnet CP (for example, the subnet AM/SM 440). When the subnet base station 430 is connected to a plurality of control plane network elements, the subnet base station 430 may select the subnet AM/SM 440 based on the subnet identifier in the access stratum message. When the subnet base station 430 is connected only to one subnet AM/SM 440, the subnet base station 430 selects the subnet AM/SM 440 that has an interface to the subnet base station 430. In 407, the subnet base station 430 sends a registration request to the subnet AM/SM 440. The subnet base station 430 may also send, to the subnet AM/SM 440, the subnet identifier received from the UE 410.

In some embodiments, the subnet AM/SM 440 may obtain a context of the UE 410 from the parent-network AM/SM 460, as shown in 409. The subnet AM/SM 440 determines the parent-network AM/SM 460 based on the temporary identifier of the UE 410 in the registration request message, and sends a context request message to the parent-network AM/SM 460. The parent-network AM/SM 460 sends the context of the UE 410 to the subnet AM/SM 440. In some examples, the parent-network AM/SM 460 needs to verify permission of the subnet AM/SM 440, to determine that the subnet AM/SM 440 has permission to obtain the context of the UE. If the subnet AM/SM 440 has no permission to obtain the context of the UE, the parent-network AM/SM 460 may refuse to send the context of the UE. If the parent-network AM/SM 460 cannot determine an identity or permission of the subnet AM/SM 440, the parent-network AM/SM 460 may refuse to send the context of the UE. A method for determining the identity and the permission of the subnet AM/SM 440 by the parent-network AM/SM 460 may be based on an access token (Access token) mechanism of a 5G NRF (Network Repository Function, network repository function). Before sending the context request message, the subnet AM/SM 440 first obtains a token from the NRF, to authorize the operation. The subnet AM/SM 440 sends the token to the parent-network AM/SM 460. The parent-network AM/SM 460 determines, based on the token, whether to allow the operation. If the token indicates that the subnet AM/SM 440 has the permission, the parent-network AM/SM 460 sends the context of the UE to the subnet AM/SM 440. In some examples, the context of the UE that is sent by the parent-network AM/SM 460 to the subnet AM/SM 440 may not include sensitive information, for example, an IMSI, of the UE. In some embodiments, the context of the UE in the parent-network AM/SM 460 does not include the IMSI. For example, an AUSF/UDM does not send the IMSI to the parent-network AM/SM 460. In an example, the parent-network AM/SM 460 stores an SUCI of the UE 410 as an identifier of the UE. Alternatively, the AUSF/UDM may allocate a temporary identifier, and send the temporary identifier to the parent-network AM/SM 460. The temporary identifier may uniquely identify the UE 410 in the AUSF/UDM, and the parent-network AM/SM 460 uses the temporary identifier as an identifier of the UE 410. In this case, because the context of the UE 410 in the parent-network AM/SM 460 does not include the IMSI, the context sent to the subnet AM/SM 440 does not include the IMSI either. In some other embodiments, the context of the UE 410 in the parent-network AM/SM 460 includes the IMSI, and when the subnet AM/SM 440 requests the context, the parent-network AM/SM 460 determines not to send the IMSI. For example, the parent-network AM/SM 460 may determine, based on the access token, that the context does not include the IMSI. Alternatively, in another example, the context request sent by the subnet AM/SM 440 may include indication information indicating that the subnet AM/SM 440 serves the subnet, and the parent-network AM/SM 460 determines, based on the indication information, not to send the IMSI.

In 411, if the subnet AM/SM 440 needs to perform authentication on the UE 410, the subnet AM/SM 440 triggers an authentication procedure. If the subnet AM/SM 440 does not obtain the context of the UE 410 from the parent-network AM/SM 460 (for example, there is no interface for obtaining the context, or the parent-network AM/SM 460 refuses to provide the context), the subnet AM/SM 440 triggers the authentication procedure. In some other examples, the subnet AM/SM 440 may alternatively trigger authentication based on another condition, for example, always perform authentication, or determine, based on time of last authentication, to trigger authentication. A condition for triggering authentication is not limited in this embodiment of this disclosure.

In 413, after the subnet AM/SM 440 accepts registration of the UE 410, the subnet AM/SM 440 may indicate the parent-network AM/SM 460 to delete a resource related to the UE 410, for example, may indicate the parent-network AM/SM 460 to delete the context of the UE 410 and a session resource corresponding to the UE 410 (for example, delete a tunnel in the parent-network UPF 470). In 415, the parent-network AM/SM 460 indicates the parent-network UPF 470 to delete the session resource. In 417, the subnet AM/SM 440 updates a session in the subnet UPF 450. The subnet UPF 450 may allocate uplink tunnel information for the subnet base station 430 to send uplink data to the subnet UPF 450. In 419, the subnet AM/SM 440 indicates the subnet base station 430 to establish a session resource. The subnet AM/SM 440 may send context information of the UE 410 to the subnet base station 430. The context information may include session information of a session that needs to be established (for example, the uplink tunnel information of the subnet UPF 450). In this step, the subnet AM/SM 440 may further indicate the subnet base station 420 to preferentially select the subnet base station when selecting a target base station. For details, refer to corresponding descriptions in 321. The subnet base station 430 allocates a downlink tunnel and configures a radio air interface for the session. The subnet base station 430 sends downlink tunnel information to the subnet AM/SM 440, and the subnet AM/SM 440 further sends the downlink tunnel information to the subnet UPF 450. In 421, the subnet AM/SM 440 sends a registration accept message to the UE 410. Alternatively, the registration accept message may be sent to the parent-network base station 420 in 419, and then sent by the parent-network base station 420 to the UE 410.

FIG. 5A and FIG. 5B are a diagram of a communication process in an example scenario according to still some other embodiments of this disclosure. Specifically, FIG. 5A and FIG. 5B show a process 500 in which a terminal device in a connected state moves from a coverage area of a parent network to a coverage area of a subnet. In the process 500, the parent network is an example of a first network, and the subnet is an example of a second network. UE 510 shown in FIG. 5A is an example of the terminal device. A subnet base station 520 is an example of an access network device serving the second network. A parent-network base station 530 is an example of an access network device serving the first network. A parent-network AM/SM 540 is an example of a control plane (CP) function serving the first network. A parent-network UPF 550 is an example of a user plane (UP) function serving the first network. A subnet AM/SM 560 is an example of a control plane function serving the second network. A subnet UPF 570 is an example of a user plane function serving the second network. It should be noted that network elements or functions in steps of the following process are described by using examples corresponding to the network elements or the functions, but are not limited to the examples, and may alternatively be other examples of the corresponding network elements or functions. As shown in FIG. 5A and FIG. 5B, in the process 500, the UE 510 in a connected state moves from the coverage area of the parent network to the coverage area of the subnet. The process is as follows.

In 501, the parent-network base station 530 sends a handover request message to the parent-network AM/SM 540. The parent-network base station 530 may include indication information in the handover request message, to indicate that a target cell/target base station is a subnet cell/subnet base station, to be specific, a service coverage of a cell/base station providing a service for the subnet or the target cell/target base station is in the coverage area of the subnet. Before sending the handover request message, the parent-network base station 530 may preferentially select the subnet base station 520 when selecting a target cell/target base station for the UE 510. For example, the parent-network AM/SM 540 may send a subnet identifier to the parent-network base station 530, and the parent-network base station 530 may preferentially select the subnet base station 520/a subnet cell based on the subnet identifier. In some examples, the parent-network base station 530 may sense, based on local configuration information, a nearby cell/base station that supports the subnet. In some other examples, when configuring measurement reporting information of the UE 510, the parent-network base station 530 may indicate the UE 510 to include, in the measurement reporting information, a subnet identifier supported by a cell; and the parent-network base station 530 may sense, based on the measurement reporting information of the UE 510, a nearby cell/base station that supports the subnet. In still some other examples, the parent-network base station 530 senses, based on information exchange through an interface between base stations, a nearby cell/base station that supports the subnet. For example, the parent-network base station 530 may receive a mapping relationship, sent by a neighboring base station, between a cell identifier and a subnet identifier; and may sense, based on the mapping relationship, a cell/base station that supports the subnet. In still some other examples, the parent-network AM/SM 540 may determine, based on the coverage area of the subnet, a list of subnet cells adjacent to the parent-network base station 530, and send the list of subnet cells to the parent-network base station 530. The parent-network base station 530 preferentially selects, based on the cell list, a cell in the cell list for handover/redirection.

In 503, the parent-network AM/SM 540 selects the subnet AM/SM 560. Before selecting the subnet AM/SM 560, the parent-network AM/SM 540 determines that the target cell/target base station is a subnet cell/subnet base station. In some examples, the parent-network AM/SM 540 may determine, based on the indication information carried in the handover request message sent by the parent-network base station 530, that the target cell/target base station is a subnet cell/subnet base station. In some other examples, the parent-network AM/SM 540 may determine, based on area information of the subnet in subscription information of the subnet, that the target cell/target base station is a subnet cell/subnet base station. When the service coverage of the target cell/target base station is in the coverage area of the subnet, the parent-network AM/SM 540 determines that the target cell/target base station is a subnet cell/subnet base station. When the target cell/target base station is a subnet cell/subnet base station, the parent-network AM/SM 540 selects the subnet AM/SM 560 serving the UE 510. Refer to the process 300. The parent-network AM/SM 540 selects the subnet AM/SM 560 in 309, and stores information about the subnet AM/SM 560 in a context of the UE 510, and the parent-network AM/SM 540 may determine address information of the subnet AM/SM 560 based on the context of the UE 510. The address information of the subnet AM/SM 560 may be a URI (Uniform Resource Identifier, uniform resource identifier), and includes an FQDN (Fully qualified domain name, fully qualified domain name) or an IP address of the subnet AM/SM 560, and a context identifier of the UE 510 in the subnet AM/SM 560.

In 505, the parent-network AM/SM 540 sends a handover request message to the subnet AM/SM 560. The handover request message includes the context of the UE 510, and the context of the UE 510 includes a security context of the UE 510. Refer to 409 in the process 400. Identification information of the UE 510 in the context of the UE 510 may be an SUCI or a UE temporary identifier allocated by an AUSF/UDM. The context of the UE that is sent by the parent-network AM/SM 540 to the subnet AM/SM 560 may not include sensitive information, for example, an IMSI, of the UE. The handover request message may further include information about the target cell/target base station. In some examples, the handover request message may further include the subnet identifier.

In 507, the subnet AM/SM 560 updates a session in the subnet UPF, and the subnet UPF 570 allocates uplink tunnel information. In 509, the subnet AM/SM 560 sends a handover request message to the target base station. In this example, an example in which the target base station is the subnet base station 520 is used for description. The handover request message may include the uplink tunnel information of the subnet UPF 570. In some examples, the handover request message may further include session information, used for the target base station to allocate a radio resource to the session. In 511, the subnet base station 520 sends a handover response message to the subnet AM/SM 560. The handover response message may include a radio transparent container to be sent to a source base station (in this example, the source base station is the parent-network base station 530). In 513, the subnet AM/SM 560 sends a handover response message to the parent-network AM/SM 540. The handover response message includes the radio transparent container. In 515, the parent-network AM/SM 540 sends a handover command message to the source base station (namely, the parent-network base station 530). The handover command message includes the radio transparent container. In 517, the parent-network base station 530 sends an RRC reconfiguration to the UE 510 based on the radio transparent container. In 519, the UE 510 accesses the subnet through the target base station (namely, the subnet base station 520 in this example), and sends a handover acknowledgement to the subnet base station 520. In 521, after receiving the handover acknowledgement, the subnet base station 520 sends a handover notification to the subnet AM/SM 560. In 523, the subnet AM/SM 560 indicates the subnet UPF 570 to switch a downlink path. A message for indicating to perform path switching includes downlink tunnel information of the subnet base station 520. The subnet UPF 570 starts to send downlink data to the subnet base station 520. In 525, the UE 510 initiates a registration procedure. During this process, the subnet AM/SM 560 may indicate the subnet base station 520 to: when selecting a target base station/cell for the UE, preferentially select a base station/cell serving the subnet. For details, refer to 321.

FIG. 6A and FIG. 6B are a diagram of a communication process in an example scenario according to still some other embodiments of this disclosure. Specifically, a process 600 shown in FIG. 6A and FIG. 6B is a process in which a terminal device in an idle state moves from a coverage area of a subnet to a coverage area of a parent network, or a process in which a terminal device registers through a parent network after receiving RRC redirection from a subnet base station. In the process 600, the parent network is an example of a first network, and the subnet is an example of a second network. UE 610 shown in FIG. 6A is an example of the terminal device. A subnet base station 620 is an example of an access network device serving the second network. A parent-network base station 630 is an example of an access network device serving the first network. A parent-network AM/SM 640 is an example of a control plane (CP) function serving the first network. A parent-network UPF 650 is an example of a user plane (UP) function serving the first network. A subnet AM/SM 660 is an example of a control plane function serving the second network. A subnet UPF 670 is an example of a user plane function serving the second network. It should be noted that network elements or functions in steps of the following process are described by using examples corresponding to the network elements or the functions, but are not limited to the examples, and may alternatively be other examples of the corresponding network elements or functions.

In 601, the subnet base station 620 sends an RRC redirection message to the UE 610. Specifically, when the UE 610 is in a connected state and moves out of an area of the coverage area of the subnet from the area of the coverage area of the subnet, the subnet base station 620 may send the RRC redirection message, to enable the UE 610 to access the subnet through the parent-network base station 630. The subnet base station 620 may sense, based on local configuration information, information about a neighboring parent-network cell/parent-network base station; and learn, based on measurement, that the UE 610 moves out of the coverage area of the subnet and enters a coverage area of the parent-network base station 630. The subnet base station 620 may further configure the UE 610 to perform measurement on a neighboring cell, and indicate the UE 610 to report a subnet identifier of the neighboring cell. The subnet base station 620 may learn, through sensing based on a measurement report of the UE 610, that the neighboring cell does not support a current subnet. That the neighboring cell does not support the current subnet means that a coverage area of the current subnet does not include a service coverage of the neighboring cell. When selecting a target base station, the subnet base station 620 may preferentially select the subnet base station 620; and when a neighboring base station does not include the subnet base station 620 for selection, the subnet base station 620 selects the parent-network base station 630 and triggers an RRC redirection procedure.

In 603, the UE 610 chooses to send a registration request message to the parent-network base station 630. The registration request message may include a temporary identifier allocated by a subnet CP (for example, a subnet AM or a subnet SM) to the UE 610. In 605, the parent-network base station 630 selects a parent-network CP, for example, selects the parent-network AM/SM 640. For details, refer to operation 303 in the process 300. In 607, the parent-network base station 630 sends a registration request message to the parent-network AM/SM 640. For details, refer to operation 305 in the process 300.

In 609, the parent-network AM/SM 640 obtains a context of the UE 610 from the subnet AM/SM 660. To obtain the context of the UE 610, the parent-network AM/SM 640 may address the subnet AM/SM 660 based on the temporary identifier of the UE 610 or based on the temporary identifier and the subnet identifier, and obtain the context of the UE 610 from the subnet AM/SM 660. The context of the UE 610 does not include an SUPI. For specific content of an identifier of the UE 610 in the context, refer to related descriptions in the foregoing other embodiments and the descriptions of the identifier of the UE in the context in operation 409 in the process 400. If the parent-network AM/SM 640 needs the SUPI (or an IMSI) of the UE 610, the parent-network AM/SM 640 may initiate re-authentication on the UE 610, and an AUSF/UDM sends the SUPI to the parent-network AM/SM 640 after the authentication succeeds.

In 611, the parent-network AM/SM 640 may trigger, as needed, re-authentication on the UE 610, in other words, perform re-authentication on the UE 610. In 613, the parent-network AM/SM 640 obtains subnet-granularity subscription information. Refer to operation 319 in the process 300. The subnet-granularity subscription information may include information about an area in which subnet UE is allowed to access the subnet (that is, an access-allowed area) and information about a service area of the subnet. In 615, the parent-network AM/SM 640 requests the parent-network UPF 650 to establish a session. The parent-network UPF allocates an uplink tunnel identifier and a downlink tunnel identifier, and sends the allocated tunnel identifiers to the parent-network CP. In 617, the parent-network AM/SM 640 sends downlink tunnel information of the parent-network UPF 650 to the subnet AM/SM 660. In 619, the subnet AM/SM 660 indicates the subnet UPF 670 to send downlink data to the parent-network UPF 650 through a tunnel of the parent-network UPF 650. In 621, the subnet AM/SM 660 sends a downlink tunnel switching response message. In 623, the parent-network AM/SM 640 requests the parent-network base station 630 to establish a session. Specifically, the parent-network AM/SM 640 sends uplink tunnel information of the parent-network UPF 650 to the parent-network base station 630, and the parent-network base station 630 allocates downlink tunnel information. In this operation, a message sent by the parent-network AM/SM 640 to the parent-network base station 630 may include QoS information corresponding to the session, and the QoS information is used for the parent-network base station 630 to allocate an air interface resource. In some examples, the message may further include a registration accept NAS message. In some examples, the message may further include mobility restriction information. The mobility restriction information sent by the parent-network AM/SM 640 to the parent-network base station 630 is described in operation 319 in the process 300. Details are not described herein again. In some examples, the message may further include the subnet identifier, and the subnet identifier may be used for the parent-network base station 630 to initiate a handover procedure or an RRC redirection procedure.

In 625, the parent-network base station 630 sends a registration accept message to the UE 610. The parent-network AM/SM 640 determines mobility restriction information based on allowed-area information in a subscription of the subnet, and sends the mobility restriction information to the UE 610 in the registration accept message. The allowed-area information includes an area, in the coverage area of the subnet, that the UE 610 is allowed to access. The parent-network AM/SM 640 sends a notification message to the subnet AM/SM 660, to indicate that the UE 610 has gained access to the subnet through the parent-network AM/SM 640.

In 627, the parent-network AM/SM 640 sends a context reception indication to the subnet AM/SM 660. After the subnet AM/SM 660 receives the context reception indication, in step 629, the subnet AM/SM 660 may delete a part of the context of the UE 610, for example, a security context of the UE 610.

FIG. 7A and FIG. 7B are a diagram of a communication process in an example scenario according to still some other embodiments of this disclosure. Specifically, the process 700 is a handover procedure in which a terminal device in a connected state is handed over from a coverage area of a subnet base station to a coverage area of a parent-network base station. In the process 700, a parent network is an example of a first network, and a subnet is an example of a second network. UE 710 shown in FIG. 7A is an example of the terminal device. A parent-network base station 720 is an example of an access network device serving the first network. A subnet base station 730 is an example of an access network device serving the second network. A parent-network AM/SM 740 is an example of a control plane (CP) function serving the first network. A parent-network UPF 750 is an example of a user plane (UP) function serving the first network. A subnet AM/SM 760 is an example of a control plane function serving the second network. A subnet UPF 770 is an example of a user plane function serving the second network. It should be noted that network elements or functions in steps of the following process are described by using examples corresponding to the network elements or the functions, but are not limited to the examples, and may alternatively be other examples of the corresponding network elements or functions.

In 701, the subnet base station 730 sends a handover request message to the subnet AM/SM 760, where the message may include cell/base station information (for example, a cell ID, a base station ID, or a TAI) of the parent-network base station 720. In some examples, the message may further carry indication information to indicate that a target cell/target base station to be accessed by the UE 710 is a non-subnet base station. When selecting a target base station, the subnet base station 730 preferentially selects a subnet base station, and selects a parent-network base station only when no appropriate subnet base station can be selected.

In 703, the subnet AM/SM 760 selects the parent-network AM/SM 740. Before the subnet AM/SM 760 selects the parent-network AM/SM 740, the subnet AM/SM 760 determines, by using one or more of the following methods (a method (a) to a method (c)), that the target cell/target base station to be accessed by the UE 710 is a non-subnet cell/base station. Method (a): Determine, based on the indication in the handover request message sent by the subnet base station 730 to the subnet AM/SM 760, that the target cell/target base station to be accessed by the UE 710 is a non-subnet cell/base station. Method (b): Determine, depending on whether an area served by the target cell/target base station includes an area of the subnet, whether the target cell/target base station to be accessed by the UE 710 is a non-subnet cell/base station. Method (c): Determine, depending on whether the subnet AM/SM 760 has established a connection to the target base station, whether the target cell/target base station to be accessed by the UE 710 is a non-subnet cell/base station. For example, it is assumed that the subnet AM/SM 760 has established connections to and exchanged related information with all subnet base stations. The subnet AM/SM 760 may query for, based on an identifier of the target cell/target base station, a subnet base station that has established a connection to the subnet AM/SM 760. If the subnet base station is found, the target cell/target base station is a subnet cell/base station; otherwise, the target cell/target base station is a non-subnet cell/base station. When the target cell/base station is a non-subnet base station, the subnet AM/SM 760 selects the parent-network AM/SM 740 based on cell/base station information (for example, a cell identifier, a base station identifier, or a TAI).

In 705, the subnet AM/SM 760 sends a handover request message to the parent-network AM/SM 740. The message may include a context of the UE 710, and the context of the UE 710 includes a security context of the UE 710. In some examples, the message may further include a subnet identifier. In some examples, the message may include information about the target base station. In some examples, the message may include callback URI information of the subnet AM/SM 760, and the callback URI information is used for subsequent message exchange between the parent-network AM/SM 740 and the subnet AM/SM 760. In 707, the parent-network AM/SM 740 requests the parent-network UPF 750 to establish a session and allocate tunnel information. In 709, the parent-network AM/SM 740 sends a handover request message to the parent-network base station 720. The message may include the subnet identifier, and the subnet identifier is used to select a target base station for next handover/redirection. In 711, the parent-network base station 720 sends a handover response to the parent-network AM/SM 740. In 713, the parent-network AM/SM 740 sends a handover response to the subnet AM/SM 760. In 715, the subnet AM/SM 760 sends a handover command to the subnet base station 730. In 717, the subnet base station indicates the UE 710 to hand over to the target parent-network base station 720. In 719, the UE 710 accesses the target parent-network base station 720 and sends a handover acknowledgement to the parent-network base station 720. In 721, the parent-network base station 720 sends a handover notification to the parent-network AM/SM 740. In 723, the parent-network AM/SM 740 indicates the subnet AM/SM 760 to switch a downlink path. The subnet AM/SM 760 indicates the subnet UPF 770 to switch a downlink path. The subnet AM/SM 760 sends downlink tunnel information of the parent-network UPF 750 to the subnet UPF 770. The subnet UPF 770 starts to send downlink data to the parent-network UPF 750. In 725, after the handover is completed, the UE 710 initiates a registration procedure through the target base station (namely, the parent-network base station 720). In the registration procedure, the parent-network AM/SM 740 obtains subscription information of the parent network, and configures mobility restriction information for the parent-network base station 720 and the UE 710 based on the subscription information of the parent network. For mobility restriction information sent to the base station and mobility restriction information sent to the terminal device (for example, the UE), refer to related descriptions in the process 300.

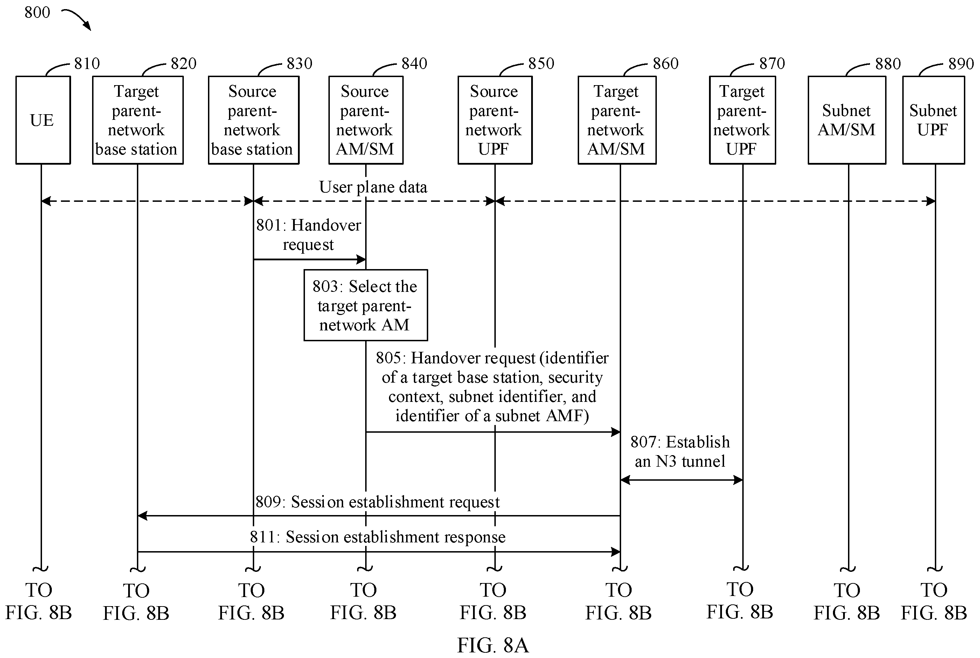

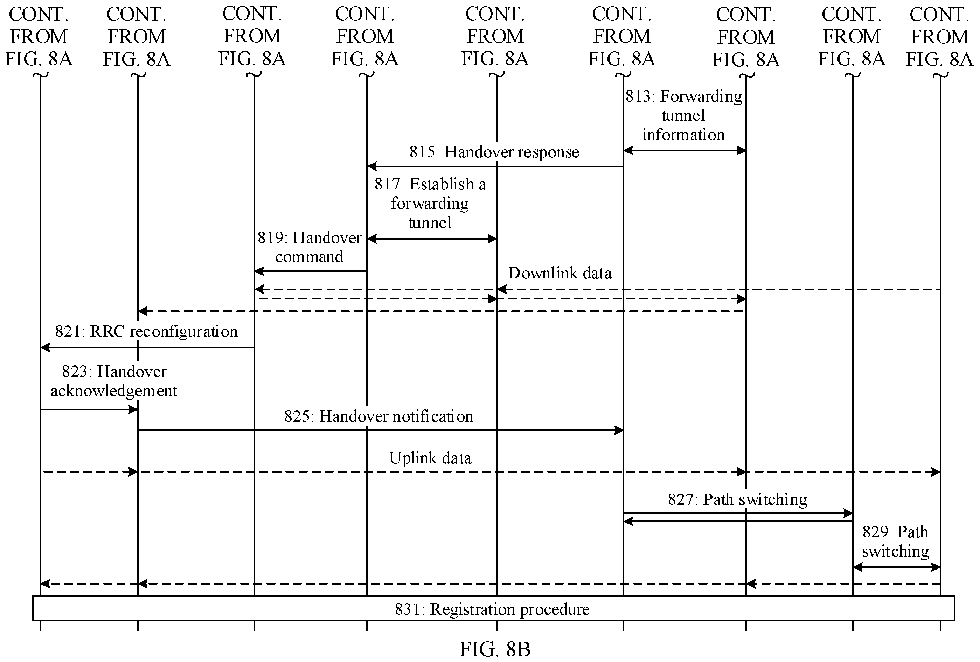

FIG. 8A and FIG. 8B are a diagram of a communication process in an example scenario according to still some other embodiments of this disclosure. Specifically, the process 800 is a process in which a terminal device is handed over between base stations when moving in a parent network. In the process 800, the parent network is an example of a first network, and a subnet is an example of a second network. UE 810 shown in FIG. 8A is an example of the terminal device. A target parent-network base station 820 is an example of an access network device that serves the first network and that is accessed by the terminal device. A source parent-network base station 830 is an example of an access network device that serves the first network and that is previously accessed by the terminal device. A source parent-network AM/SM 840 is an example of a control plane (CP) function that serves the first network and that previously serves the terminal device. A source parent-network UPF 850 is an example of a user plane (UP) function that serves the first network and that previously serves the terminal device. A target parent-network AM/SM 860 is an example of a control plane (CP) function that serves the first network and that is to serve the terminal device. A target parent-network UPF 870 is an example of a user plane (UP) function that serves the first network and that is to serve the terminal device. A subnet AM/SM 880 is an example of a control plane function serving the second network. A subnet UPF 890 is an example of a user plane function serving the second network. It should be noted that network elements or functions in steps of the following process are described by using examples corresponding to the network elements or the functions, but are not limited to the examples, and may alternatively be other examples of the corresponding network elements or functions.

As shown in FIG. 8A and FIG. 8B, in the process 800, in 801, the source parent-network base station 830 sends a handover request message to the source parent-network AM/SM 840. When selecting a target cell/base station, if there is a subnet base station, the source parent-network base station 830 preferentially selects the subnet base station. In this example, because no subnet cell/base station is available for selection, a selected target cell/base station is a parent-network cell/base station. In some examples, during selection of the target cell/base station, an access-allowed cell/base station may be selected as the target cell/base station based on configured mobility restriction information. In 803, the source parent-network AM/SM 840 selects the target parent-network AM/SM 860. When selecting a target CP (for example, a target AM/SM), the source parent-network AM/SM 840 may select the target AM/SM depending on whether the target cell/base station is a subnet cell/base station. For example, if the target cell/base station is a subnet cell/base station, the source parent-network AM/SM 840 selects a subnet AM/SM in a context of the UE 810; otherwise, the source parent-network AM/SM 840 selects a parent-network AM/SM based on information about the target cell/base station. In this example, the selected target AM/SM is the target parent-network AM/SM 860. In 805, the source parent-network AM/SM 840 sends a handover request message to the target parent-network AM/SM 860. The handover request message may include identification information of the target parent-network base station 820, a security context of the UE 810, a subnet identifier, and identification information of the subnet AM/SM 880. The context of the UE 810 may include the subnet identifier and information about the subnet AM/SM 760. In 807, an N3 tunnel is established. For this operation, refer to operation 507 in the process 500. In this step, the target parent-network UPF 870 allocates downlink tunnel information. In 809, the target parent-network AM/SM 860 sends a session establishment request to the target parent-network base station 820. In 811, the target parent-network base station 820 sends a session establishment response to the target parent-network AM/SM 860. The message includes downlink tunnel information of the target parent-network base station 820 and optional forwarding tunnel information. A forwarding tunnel is used for the target parent-network base station 820 to receive data sent by the source base station 830. In 813, the target parent-network AM/SM 860 sends the forwarding tunnel information and the downlink tunnel information of the target parent-network base station 820 to the target parent-network UPF 870, and the target parent-network UPF 870 allocates forwarding tunnel information and sends the forwarding tunnel information to the target parent-network AM/SM 860. In 815, the target parent-network AM/SM 860 sends a handover response to the source parent-network AM/SM 840, where the handover response includes the forwarding tunnel information allocated by the target parent-network UPF 870. In 817, the source parent-network AM/SM 840 sends, to the source parent-network UPF 850, the forwarding tunnel information allocated by the target parent-network UPF 870, and the source parent-network UPF 850 allocates forwarding tunnel information. In 819, the source parent-network AM/SM 840 sends a handover command to the source parent-network base station 830, where the handover command includes the forwarding tunnel information allocated by the source parent-network UPF 850. In this case, the source parent-network base station 830 may forward, to the target parent-network base station 820 through the source parent-network UPF 850 and the target parent-network UPF 870, downlink data received from the source parent-network UPF 850. In 821, the source parent-network base station 830 sends an RRC reconfiguration to the UE 810. In 823, the UE 810 sends a handover acknowledgement to the target parent-network base station 820. In 825, after receiving the handover acknowledgement, the target parent-network base station 820 sends a handover notification to the target parent-network AM/SM 860. In 827, the target parent-network AM/SM 860 indicates the subnet AM/SM 880 to perform path switching. The message includes the downlink tunnel information allocated by the target parent-network UPF 870 in step 807. For 829, refer to operation 523 in the process 500. In this step, the downlink tunnel information allocated by the target parent-network UPF 870 in step 807 is sent to the subnet UPF 890. In this case, the subnet UPF 890 directly sends the downlink data to the target parent-network UPF 870, and path switching is completed. In 831, the UE 810 initiates a registration procedure. In the registration procedure, the target parent-network AM/SM 860 obtains subnet-granularity subscription information, and configures mobility restriction information for the target parent-network base station 820 and mobility restriction information for the UE 810 based on the subnet-granularity subscription information.

According to the foregoing embodiments of this disclosure, information about an area (Allowed Service area) that a terminal device (for example, UE) in a second network (for example, a subnet) is allowed to access and information about a campus range of the subnet are stored in subscription information (for example, subnet-granularity subscription information) of the second network. When the UE performs access through a first network (for example, a parent network), a core network device (a subnet CP) serving the second network authorizes the UE, and a core network device (a parent-network CP) serving the first network obtains the subnet-granularity subscription information. The parent-network CP further determines, based on the subnet-granularity subscription information, to allow access from the UE. The UE may access the subnet through the parent network. In this way, the UE can access the subnet through a third-party PLMN network, and the UE may not subscribe to the PLMN. When the UE accesses the parent network, the parent-network CP may determine mobility restriction information based on information about an access-allowed area in the subnet, and send the mobility restriction information to the UE/access network device for the UE/access network device to use when selecting a target cell/base station. In this manner, a base station and the UE can select a cell that can be accessed, to avoid power consumption caused by continuous attempts of the UE due to an access failure. A context of the UE in the subnet CP does not include sensitive information (for example, an SUPI or an IMSI) of the UE, but instead, includes an SUCI, a temporary identifier, or an external unique identifier (for example, an ISDN). The temporary identifier may be allocated by an AUSF/UDM, and may be used to address the AUSF/UDM. If the parent-network CP needs to obtain the SUPI, the parent-network CP may query the AUSF/UDM based on an identifier of the UE in the context. Because the subnet CP may be deployed in a campus and security of the subnet CP is not as good as that of a device in a current operator network, the solution of hiding a real identifier of the UE and skipping sending sensitive information of the UE in embodiments of this disclosure can prevent leakage of sensitive user information. A context of the UE in the parent-network CP includes information about the subnet CP. During registration, the UE selects and establishes a connection to the subnet CP. During handover or redirection, a source base station determines, through sensing, whether a surrounding base station supports the subnet, and preferentially selects a subnet base station when selecting a target base station. In this way, the UE preferentially camps in an area of the subnet.

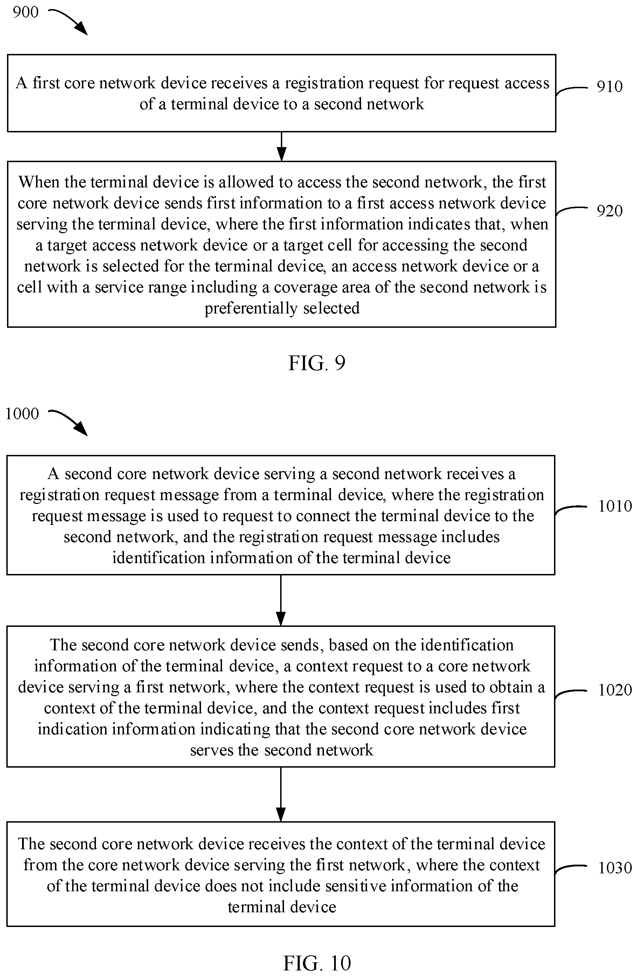

FIG. 9 is a schematic flowchart of an implementation at a communication apparatus according to some embodiments of this disclosure. As shown in FIG. 9, a communication apparatus that performs a process 900 may be a first core network device or a chip, a module, a component, or the like in the first core network device. An example of the first core network device may be the first core network device 230. In a block 910, the first core network device receives a registration request for requesting access of a terminal device to a second network. In a block 920, when the terminal device is allowed to access the second network, the first core network device sends first information to a first access network device serving the terminal device, where the first information indicates that, when a target access network device or a target cell for accessing the second network is selected for the terminal device, an access network device or a cell whose service coverage includes a coverage area of the second network is preferentially selected. In some embodiments, the process 900 may further include another operation performed at the first core network device (for example, a parent-network CP, a parent-network AM/SM, a subnet CP, or a subnet AM/SM) and described with reference to FIG. 2 to FIG. 8B in embodiments of this disclosure.

FIG. 10 is a schematic flowchart of an implementation at a communication apparatus according to some other embodiments of this disclosure. As shown in FIG. 10, a communication apparatus that performs a process 1000 may be a second core network device or a chip, a module, a component, or the like in the second core network device. An example of the second core network device is the second core network device 250. In a block 1010, the second core network device serving a second network receives a registration request message from a terminal device, where the registration request message is used to request access of the terminal device to the second network, and the registration request message includes identification information of the terminal device. In a block 1020, the second core network device sends, based on the identification information of the terminal device, a context request to a core network device serving a first network, where the context request is used to obtain a context of the terminal device, and the context request includes first indication information indicating that the second core network device serves the second network. In a block 1030, the second core network device receives the context of the terminal device from the core network device serving the first network, where the context of the terminal device does not include sensitive information of the terminal device. In some embodiments, the process 1000 may further include another operation performed at the second core network device (for example, a subnet CP or a subnet AM/SM) and described with reference to FIG. 2 to FIG. 8B in embodiments of this disclosure.

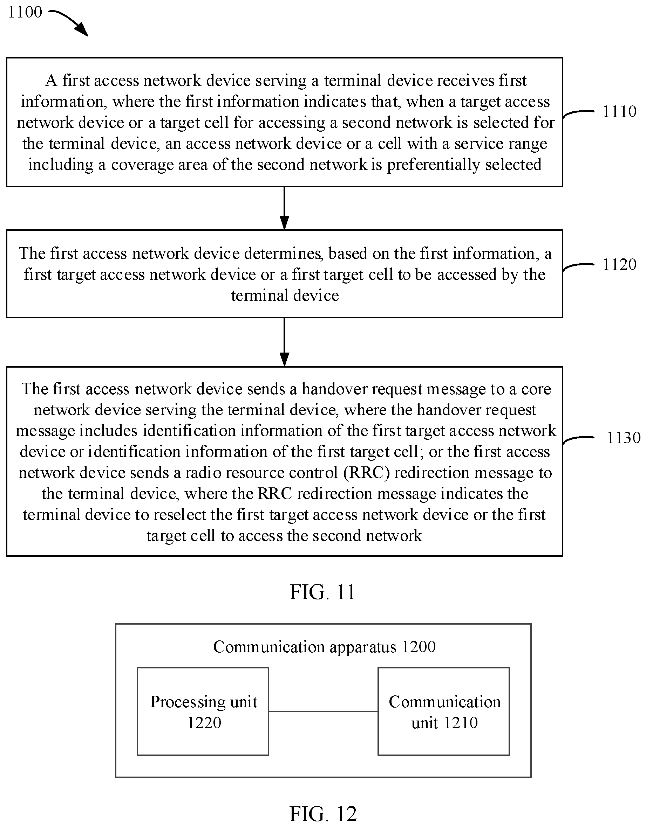

FIG. 11 is a schematic flowchart of an implementation at a communication apparatus according to still some other embodiments of this disclosure. As shown in FIG. 11, a communication apparatus that performs a process 1100 may be a first access network device serving a terminal device, or a chip, a module, a component, or the like in the first access network device. An example of the first access network device may be the first access network device 220. In a block 1110, the first access network device serving the terminal device receives first information, where the first information indicates that, when a target access network device or a target cell for accessing a second network is selected for the terminal device, an access network device or a cell whose service coverage includes a coverage area of the second network is preferentially selected. In a block 1120, the first access network device determines, based on the first information, a first target access network device or a first target cell to be accessed by the terminal device. In block 1130, the first access network device sends a handover request message to a core network device serving the terminal device, where the handover request message includes identification information of the first target access network device or identification information of the first target cell. Alternatively, the first access network device sends a radio resource control (RRC) redirection message to the terminal device, where the RRC redirection message indicates the terminal device to reselect the first target access network device or the first target cell to access the second network. In some embodiments, the process 1100 may further include another operation performed at the first access network device (for example, a parent-network base station serving as a source base station or a subnet base station serving as a source base station) and described with reference to FIG. 2 to FIG. 8B in embodiments of this disclosure.

FIG. 12 is a diagram of a structure of a possible communication apparatus according to an embodiment of this disclosure. The communication apparatus may implement the functions of the communication apparatus (for example, the communication apparatus mentioned in the embodiments shown in FIG. 9 to FIG. 11) in the method embodiments, and therefore can also achieve beneficial effects of the method embodiments. For example, in some embodiments of this disclosure, the communication apparatus may be the access network device 120 or 130 or the core network device 140 or 150 shown in FIG. 1B, or may be a module (for example, a chip) used in the access network device 120 or 130 or the core network device 140 or 150.

As shown in FIG. 12, the communication apparatus 1200 includes a communication unit 1210, and in some examples, may further include a processing unit 1220. The communication apparatus may be configured to implement the functions of the communication apparatus in the method embodiments shown in FIG. 9 to FIG. 11. In an example in which the communication apparatus is configured to implement the functions of the communication apparatus shown in FIG. 9, the communication unit 1210 may include a first receiving unit and a first sending unit, and in some examples, may be specifically implemented as a transmitter and a receiver. In an example in which the communication apparatus is configured to implement the functions of the communication apparatus shown in FIG. 10, the communication unit 1210 may include a second receiving unit and a second sending unit, and in some examples, may be specifically implemented as a transmitter and a receiver. In an example in which the communication apparatus is configured to implement the functions of the communication apparatus shown in FIG. 11, the communication unit 1210 may include a third receiving unit and a third sending unit, and in some examples, may be specifically implemented as a transmitter and a receiver. The processing unit 1220 may be specifically implemented as a determining unit, and in some examples, may be specifically implemented as a processor.

When the communication apparatus 1200 is configured to implement the functions of the communication apparatus in the method embodiment shown in FIG. 9, the first receiving unit in the communication unit 1210 is configured to receive a registration request for requesting access of a terminal device to a second network; and the first sending unit is configured to: when the terminal device is allowed to access the second network, send first information to a first access network device serving the terminal device, where the first information indicates that, when a target access network device or a target cell for accessing the second network is selected for the terminal device, an access network device or a cell whose service coverage includes a coverage area of the second network is preferentially selected.

When the communication apparatus 1200 is configured to implement the functions of the communication apparatus in the method embodiment shown in FIG. 10, the second receiving unit in the communication unit 1210 is configured to receive a registration request message from a terminal device, where the registration request message is used to request access of the terminal device to a second network, and the registration request message includes identification information of the terminal device; the second sending unit is configured to send, based on the identification information of the terminal, a context request to a core network device serving a first network, where the context request is used to obtain a context of the terminal device, and the context request includes first indication information indicating that a second core network device serves the second network; and the second receiving unit is further configured to receive the context of the terminal device from the core network device serving the first network, where the context of the terminal device does not include sensitive information of the terminal device.

When the communication apparatus 1200 is configured to implement the functions of the communication apparatus in the method embodiment shown in FIG. 11, the third receiving unit in the communication unit 1210 is configured to receive first information, where the first information indicates that, when a target access network device or a target cell for accessing a second network is selected for the terminal device, an access network device or a cell whose service coverage includes a coverage area of the second network is preferentially selected; the third sending unit in the communication unit 1210 is configured to send a handover request message to a core network device serving the terminal device, where the handover request message includes identification information of a first target access network device or identification information of a first target cell; or the third sending unit is configured to send a radio resource control (RRC) redirection message to the terminal device, where the RRC redirection message indicates the terminal device to reselect the first target access network device or the first target cell to access the second network; and the determining unit serving as the processing unit 1220 is configured to determine, based on the first information, the first target access network device or the first target cell to be accessed by the terminal device.

For more detailed descriptions of the foregoing units, refer to related descriptions in the method embodiments. Details are not described herein again.

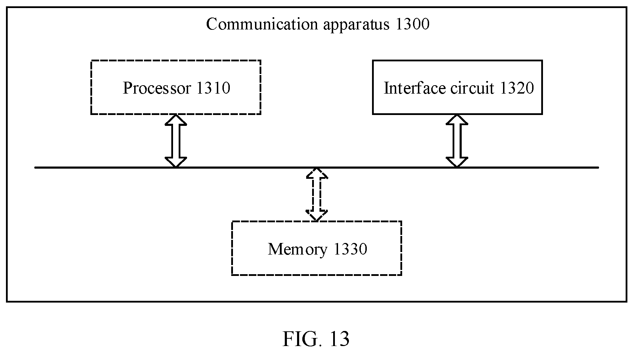

FIG. 13 is a simplified block diagram of an example device in a possible implementation according to an embodiment of this disclosure. As shown in FIG. 13, a communication apparatus 1300 includes a processor 1310 and an interface circuit 1320. The processor 1310 and the interface circuit 1320 are coupled to each other. It can be understood that the interface circuit 1320 may be a transceiver or an input/output interface. Optionally, the communication apparatus 1300 may further include a memory 1330, configured to store instructions to be executed by the processor 1310, or store input data needed for running instructions by the processor 1310, or store data generated after the processor 1310 runs instructions. It should be noted that, in some embodiments, the processor 1310 and the memory 1330 may be integrated into a same component. When the communication apparatus 1300 is configured to implement the methods in the method embodiments, the interface circuit 1320 is configured to perform the functions of the communication unit 1210.

When the communication apparatus is a chip used in a communication apparatus, the chip in the communication apparatus correspondingly implements the functions of the communication apparatus in the method embodiments. The chip in the communication apparatus sends data to another module (for example, a radio frequency module or an antenna) in the communication apparatus, where the data may be sent to another apparatus. Alternatively, the chip in the communication apparatus receives data from another module (for example, a radio frequency module or an antenna) in the communication apparatus, where the data is received from another apparatus.

It can be understood that the processor in embodiments of this disclosure may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this disclosure provides a communication system. The communication system may include the communication apparatus in the embodiments shown in FIG. 9 to FIG. 11. Optionally, the communication apparatus in the communication system may correspondingly perform the communication methods shown in FIG. 9 to FIG. 11.

An embodiment of this disclosure further provides a circuit. The circuit may be coupled to a memory, and may be configured to perform a process related to a communication apparatus in any one of the method embodiments. The chip system may include the chip, and may further include another component like a memory or a transceiver.

It should be understood that the processor mentioned in embodiments of this disclosure may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this disclosure may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and serves as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate, a transistor logic device, or a discrete hardware component, a memory (a storage module) is integrated into the processor.

It should be noted that the memory described in this specification is intended to include but is not limited to these memories and any other appropriate type of memory.

It should be understood that, in embodiments of this disclosure, sequence numbers of the foregoing processes do not mean an execution sequences, and an execution sequence of the processes should be determined based on functions and internal logic of the processes, and should not be construed as any limitation on implementation processes of embodiments of this disclosure.

A person of ordinary skill in the art may be aware that modules and algorithm steps in examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this disclosure.

It can be clearly understood by a person skilled in the art that, for ease and brevity of description, for detailed working processes of the foregoing systems, apparatuses, and modules, reference may be made to corresponding processes in the method embodiments. Details are not described herein again.

In the several embodiments provided in this disclosure, it should be understood that the disclosed communication methods and apparatuses may be implemented in other manners. For example, the described apparatus embodiments are merely examples. For example, division into the modules is merely logical function division. During actual implementation, another division manner may be used. For example, a plurality of modules or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The modules described as separate components may or may not be physically separated, and components shown as modules may or may not be physical modules, to be specific, may be located in one place, or may be distributed on a plurality of network units. Some or all of the units may be selected according to actual requirements to achieve the objectives of the solutions in embodiments.

In addition, functional modules in embodiments of this disclosure may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this disclosure essentially, or the part making a contribution, or a part of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this disclosure. The foregoing computer-readable storage medium may be any usable medium that can be accessed by a computer. For example, the computer-readable storage medium may include but is not limited to a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk drive or another optical disc storage, a disk storage medium or another magnetic storage device, or any other medium that can carry or store expected program code in a form of an instruction or a data structure and that can be accessed by a computer.

As used in this specification, the term "including" and similar terms thereof should be understood as non-exclusive inclusions, namely, "including but not limited to". The term "based on" should be understood as "at least partially based on". The term "an embodiment" or "the embodiment" should be understood as "at least one embodiment". The terms "first", "second", and the like may indicate different objects or a same object, and are merely intended to distinguish between the indicated objects, but not to imply a specific spatial order, chronological order, order of importance, or the like of the indicated objects. In some embodiments, a value, a process, a selected item, a determined item, a device, an apparatus, a means, a part, a component, or the like is referred to as being "optimal", "lowest", "highest", "minimum", "maximum", or the like. It should be understood that the descriptions are intended to indicate that selection may be performed among many available functional selections, and the selection does not need to be better, lower, higher, smaller, larger, or otherwise preferred than other selections in other aspects or in all aspects. As used in this specification, the term "determining" may cover a variety of actions. For example, "determining" may include performing an operation, calculating, processing, exporting, investigating, searching (for example, searching a table, a database, or another data structure), or finding. In addition, "determining" may include receiving (for example, receiving information), accessing (for example, accessing data in a memory), or the like. In addition, "determining" may include parsing, selecting, choosing, establishing, or the like.

The foregoing descriptions are merely specific implementations of this disclosure, but are not intended to limit the protection scope of embodiments of this disclosure. Any variation or replacement readily figured out by a person skilled in the art within the technical scope disclosed in embodiments of this disclosure shall fall within the protection scope of embodiments of this disclosure. Therefore, the protection scope of embodiments of this disclosure shall be subject to the protection scope of the claims.

## Claims

1. A communication method, comprising:
receiving, by a first core network device, a registration request for requesting access of a terminal device to a second network; and
when the terminal device is allowed to access the second network, sending, by the first core network device, first information to a first access network device serving the terminal device, wherein the first information indicates that, when a target access network device or a target cell for accessing the second network is selected for the terminal device, an access network device or a cell whose service coverage comprises a coverage area of the second network is preferentially selected.

2. The method according to claim 1, wherein the first information comprises at least one of the following:
identification information of the second network;
a cell list, wherein the cell list comprises information about one or more cells whose service coverage comprises the coverage area of the second network; or
an access network device list, wherein the access network device list comprises information about one or more access network devices whose service coverage comprises the coverage area of the second network.

3. The method according to claim 1 or 2, wherein the first core network device is a core network device serving a first network, and the method further comprises:
receiving, by the first core network device, a context request from a second core network device, wherein the second core network device serves the second network, the context request is used to obtain a context of the terminal device, and the context request comprises first indication information indicating that the second core network device serves the second network; and
sending, by the first core network device, the context of the terminal device to the second core network device based on the first indication information, wherein the context does not comprise sensitive information of the terminal device.

4. The method according to claim 3, further comprising:
receiving, by the first core network device from the second core network device, second indication information indicating deletion of the context of the terminal device; and
deleting, by the first core network device based on the second indication information, the context of the terminal device on the first core network device and a session resource corresponding to the terminal device.

5. The method according to claim 1, wherein the first core network device is a core network device serving the first network, and the method further comprises:
receiving, by the first core network device, a handover request message from the first access network device, wherein the handover request message comprises identification information of a target access network device or a target cell to be accessed by the terminal device;
selecting, by the first core network device based on the target access network device or the target cell to be accessed by the terminal device being an access network device or a cell whose service coverage comprises the coverage area of the second network, a second core network device serving the second network; and
sending, by the first core network device, a context of the terminal device to the second core network device, wherein the context does not comprise sensitive information of the terminal device.

6. The method according to claim 5, further comprising:
determining, by the first core network device based on at least one of the following, that the target access network device or the target cell to be accessed by the terminal device is an access network device or a cell whose service coverage comprises the coverage area of the second network:
the handover request message indicates that the target access network device or the target cell to be accessed by the terminal device serves the second network; or
a service area of the second network comprises a service area of the target access network device or the target cell to be accessed by the terminal device, and subscription information of the second network comprises the service area of the second network.

7. The method according to any one of claims 1 to 6, further comprising:
sending, by the first core network device, second information to the first access network device, wherein the second information indicates that, when a target access network device or a target cell for accessing the second network is selected for the terminal device, an access network device or a cell whose service coverage comprises an area, in the coverage area of the second network, that the terminal device is allowed to access is selected.

8. The method according to any one of claims 1 to 7, further comprising:
sending, by the first core network device, third information to the terminal device, wherein the third information indicates the terminal device to: when selecting a target access network device or a target cell for accessing the second network, select an access network device or a cell whose service coverage comprises an area, in the coverage area of the second network, that the terminal device is allowed to access.

9. A communication method, comprising:
receiving, by a second core network device serving a second network, a registration request message from a terminal device, wherein the registration request message is used to request access of the terminal device to the second network, and the registration request message comprises identification information of the terminal device;
sending, by the second core network device based on the identification information of the terminal device, a context request to a core network device serving a first network, wherein the context request is used to obtain a context of the terminal device, and the context request comprises first indication information indicating that the second core network device serves the second network; and
receiving, by the second core network device, the context of the terminal device from the core network device serving the first network, wherein the context of the terminal device does not comprise sensitive information of the terminal device.

10. A communication method, comprising:
receiving, by a first access network device serving a terminal device, first information, wherein the first information indicates that, when a target access network device or a target cell for accessing a second network is selected for the terminal device, an access network device or a cell whose service coverage comprises a coverage area of the second network is preferentially selected;
determining, by the first access network device based on the first information, a first target access network device or a first target cell to be accessed by the terminal device; and
sending, by the first access network device, a handover request message to a core network device serving the terminal device, wherein the handover request message comprises identification information of the first target access network device or identification information of the first target cell; or
sending, by the first access network device, a radio resource control (RRC) redirection message to the terminal device, wherein the RRC redirection message indicates the terminal device to reselect the first target access network device or the first target cell to access the second network.

11. The method according to claim 10, wherein the first information comprises at least one of the following:
identification information of the second network;
a cell list, wherein the cell list comprises information about one or more cells whose service area comprises the coverage area of the second network; or
an access network device, wherein the access network device comprises information about one or more access network devices whose service coverage comprises the coverage area of the second network.

12. The method according to claim 11, wherein the method further comprises:
receiving, by the first access network device, measurement reporting information of the first target cell from the terminal device, wherein the measurement reporting information comprises the identification information of the second network; or
receiving, by the first access network device, indication information, wherein the indication information indicates that a service coverage of the first target access network device or the first target cell comprises the coverage area of the second network; or
determining, by the first access network device based on local configuration information, that a service coverage of the first target access network device or the first target cell comprises the coverage area of the second network.

13. The method according to claim 12, further comprising:
sending, by the first access network device, indication information to the terminal device, wherein the indication information indicates that, when the service coverage of the first target cell comprises the coverage area of the second network, the measurement reporting information of the first target cell comprises the identification information of the second network.

14. The method according to any one of claims 10 to 12, further comprising:
receiving, by the first access network device, second information, wherein the second information indicates the first access network device to select a cell in an access-allowed area of the second network when determining the target cell.

15. The method according to any one of claims 10 to 14, wherein the method further comprises:
selecting, by the first access network device, the first target access network device or the first target cell when there is an access network device or a cell whose service coverage comprises the coverage area of the second network among a neighboring access network device or a neighboring cell of an access network device or a cell currently accessed by the terminal device.

16. The method according to any one of claims 10 to 15, wherein the handover request message indicates that the first target access network device or the first target cell serves the second network.

17. A communication method, comprising:
receiving, by a core network device serving a second network, a handover request message sent by a first access network device serving a terminal device, wherein the handover request message indicates a target access network device or a target cell to be accessed by the terminal device; and
selecting, based on determining that the target access network device or the target cell is an access network device or a cell serving a first network, a core network device serving the first network, to serve the terminal device.

18. The method according to claim 17, wherein it is determined, based on at least one of the following, that the target access network device or the target cell is an access network device or a cell serving the first network:
the handover request message sent by the first access network device serving the terminal device indicates that the target access network device or the target cell is an access network device or a cell whose service coverage comprises a coverage area of the first network;
a service area of the target access network device or the target cell is outside an area of a coverage area of the second network, wherein a service area of the second network is indicated by first subscription information of the second network in the first network; or
the core network device serving the second network has not established a connection to or exchanged information with the target access network device.

19. The method according to claim 17 or 18, further comprising:
sending the handover request message to the core network device serving the first network, wherein the handover request message comprises at least one of the following: identification information of the second network, a context of the terminal device, or callback address information of the core network device serving the second network, wherein the callback address information is used to exchange a message between the core network device serving the first network and the core network device serving the second network, and the identification information of the second network indicates the terminal device to access the second network.

20. A communication method, applied to a communication apparatus, and comprising:
receiving indication information from a first access network device, wherein the indication information indicates to perform measurement on a first target cell; and
sending measurement reporting information of the first target cell based on the indication information, wherein the measurement reporting information of the first target cell comprises identification information of a target network, and a service coverage of the first target cell comprises a coverage area of the target network.

21. The method according to claim 20, wherein the indication information further indicates to include the identification information of the target network in the measurement reporting information of the first target cell when the service coverage of the first target cell comprises the coverage area of the target network.

22. The method according to claim 20 or 21, wherein the indication information further indicates to include an identifier of the target network in the measurement reporting information when the target network is a second network.

23. The method according to any one of claims 20 to 22, wherein the method further comprises:
reading a first system information broadcast field of the first target cell to obtain an identifier of a network served by the first target cell.

24. The method according to any one of claims 20 to 23, wherein the method further comprises:
receiving third information from a first core network device, wherein the third information indicates that, when a target access network device or a target cell for accessing the second network is selected, an access network device or a cell whose service coverage comprises an area, in a coverage area of the second network, that the communication apparatus is allowed to access is selected.

25. The method according to any one of claims 20 to 22, wherein the communication apparatus is a terminal device or a chip in a terminal device.

26. A communication apparatus, comprising a module for performing the method according to any one of claims 1 to 8.

27. A communication apparatus, comprising a module for performing the method according to claim 9.

28. A communication apparatus, comprising a module for performing the method according to any one of claims 10 to 16.

29. A communication apparatus, comprising a module for performing the method according to any one of claims 17 to 19.

30. A communication apparatus, comprising a module for performing the method according to any one of claims 20 to 25.

31. A communication apparatus, comprising a processor and a memory storing instructions, wherein when the instructions are executed by the processor, the method according to any one of claims 1 to 8, claim 9, claims 10 to 16, claims 17 to 19, or claims 20 to 25 is performed.

32. A communication system, comprising at least two of the following:
the communication apparatus according to claim 26, the communication apparatus according to claim 27, the communication apparatus according to claim 28, the communication apparatus according to claim 29, or the communication apparatus according to claim 30.

33. A computer-readable storage medium, wherein the computer-readable storage medium stores instructions, and when the instructions are executed, the method according to any one of claims 1 to 8, claim 9, claims 10 to 16, claims 17 to 19, or claims 20 to 25 is performed.
